(19)

**Europäisches Patentamt**
**European Patent Office**
**Office européen des brevets**

(11) **EP 4 653 850 A1**

(12) **EUROPEAN PATENT APPLICATION**
published in accordance with Art. 153(4) EPC

(43) Date of publication:
**26.11.2025  Bulletin 2025/48**

(51) International Patent Classification (IPC):
*G01N 21/64* (2006.01)      *G01N 21/27* (2006.01)
*G02B 21/06* (2006.01)      *G02B 21/36* (2006.01)

(21) Application number: **23924265.4**

(52) Cooperative Patent Classification (CPC):
**G01N 21/27; G01N 21/64; G02B 21/06;**
**G02B 21/36**

(22) Date of filing: **27.12.2023**

(86) International application number:
**PCT/JP2023/047024**

(87) International publication number:
**WO 2024/176621 (29.08.2024 Gazette 2024/35)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **24.02.2023  JP 2023027531**

(71) Applicant: **Hamamatsu Photonics K.K.**
**Hamamatsu-shi, Shizuoka 435-8558 (JP)**

(72) Inventors:
• **KOBAYASHI, Masanori**
  **Hamamatsu-shi, Shizuoka 435-8558 (JP)**
• **WATANABE, Satoshi**
  **Hamamatsu-shi, Shizuoka 435-8558 (JP)**
• **TAKAHASHI, Jun**
  **Hamamatsu-shi, Shizuoka 435-8558 (JP)**
• **IKEMURA, Kenichiro**
  **Hamamatsu-shi, Shizuoka 435-8558 (JP)**
• **HIGUCHI, Takafumi**
  **Hamamatsu-shi, Shizuoka 435-8558 (JP)**
• **KAMO, Wataru**
  **Hamamatsu-shi, Shizuoka 435-8558 (JP)**
• **IWAMURA, Takumi**
  **Hamamatsu-shi, Shizuoka 435-8558 (JP)**
• **SHOYAMA, Ryosuke**
  **Hamamatsu-shi, Shizuoka 435-8558 (JP)**

(74) Representative: **Hoffmann Eitle**
**Patent- und Rechtsanwälte PartmbB**
**Arabellastraße 30**
**81925 München (DE)**

(54) **IMAGE ACQUISITION DEVICE**

(57)      An image acquisition device includes a support unit configured to support a sample, a light emitting unit configured to emit excitation light, a first light detection unit configured to detect fluorescent light emitted from the sample, a first optical path switching unit configured to switch an optical path of the excitation light and an optical path of the fluorescent light, and an optical filter unit including an optical filter through which the fluorescent light is transmitted. The first optical path switching unit is configured to switch the optical path of the excitation light from a first optical path to a second optical path and switch the optical path of the fluorescent light from the second optical path to a third optical path. The optical filter has a transmission characteristic in which transmittance changes in a fluorescent light wavelength region. The optical filter unit is configured to arrange the optical filter on the third optical path.

*Fig.1*

## Description

### Technical Field

The present disclosure relates to an image acquisition device for acquiring a plurality of fluorescent light images separated for each of a plurality of wavelength regions.

### Background Art

There is known an image acquisition device that irradiates a sample such as a pathological cell stained with a plurality of fluorescent light dyes with excitation light to acquire multiple fluorescent light images of the sample, and applies unmixing processing to the acquired plurality of multiple fluorescent light images to acquire a plurality of fluorescent light images separated for each of the plurality of fluorescent light dyes (see, for example, Patent Literature 1).

### Citation List

### Patent Literature

Patent Literature 1: Japanese Unexamined Patent Publication No. 2021-526220

### Summary of Invention

### Technical Problem

In order to perform the unmixing processing described above, for example, matrix data to be multiplied by the plurality of multiple fluorescent light images may be acquired by using nonnegative matrix factorization (NFM). In this case, for example, when the number of pixels of the image is large, it takes a huge amount of time to acquire the matrix data, and as a result, there is a possibility that the plurality of fluorescent light images cannot be efficiently acquired. In addition, for example, when an amount of information on a certain fluorescent light dye is small, accuracy of the matrix data decreases, and as a result, there is a possibility that the plurality of fluorescent light images cannot be acquired with high accuracy.

An object of the present disclosure is to provide an image acquisition device capable of efficiently and accurately acquiring a plurality of fluorescent light images separated for each of a plurality of wavelength regions.

### Solution to Problem

An image acquisition device according to one aspect of the present disclosure is [1] "an image acquisition device including: a support unit configured to support a sample; a light emitting unit configured to emit excitation light; a first light detection unit configured to detect fluorescent light emitted from the sample by irradiation with the excitation light; a first optical path switching unit configured to switch an optical path of the excitation light and an optical path of the fluorescent light; and an optical filter unit including an optical filter through which the fluorescent light is transmitted, in which the light emitting unit is optically connected to the first optical path switching unit by a first optical path, the support unit is optically connected to the first optical path switching unit by a second optical path, the first light detection unit is optically connected to the first optical path switching unit by a third optical path, the first optical path switching unit is configured to switch the optical path of the excitation light in a plurality of first wavelength regions different from each other from the first optical path to the second optical path, and switch the optical path of the fluorescent light in a plurality of second wavelength regions shifted from the plurality of first wavelength regions from the second optical path to the third optical path, the optical filter has a transmission characteristic in which transmittance changes in a fluorescent light wavelength region including the plurality of second wavelength regions, and the optical filter unit is configured to arrange the optical filter on the third optical path".

The image acquisition device according to [1] can detect the fluorescent light emitted from the sample through the optical filter having the transmission characteristic in which the transmittance changes in the fluorescent light wavelength region. As a result, it is possible to efficiently and accurately acquire matrix data for performing unmixing processing. Therefore, according to the image acquisition device according to [1], it is possible to efficiently and accurately acquire a plurality of fluorescent light images separated for each of a plurality of wavelength regions.

An image acquisition device according to one aspect of the present disclosure may be [2] "the image acquisition device according to [1], in which the first optical path switching unit includes a dichroic mirror configured to selectively reflect the excitation light in the plurality of first wavelength regions and selectively transmit the fluorescent light in the plurality of second wavelength regions". According to the image acquisition device according to [2], it is possible to reliably irradiate the sample with the excitation light for each of the plurality of first wavelength regions. In addition, the fluorescent light can be reliably detected in the plurality of second wavelength regions.

An image acquisition device according to one aspect of the present disclosure may be [3] "the image acquisition device according to [2], in which the first optical path switching unit further includes a first multiband pass filter configured to selectively transmit the excitation light in the plurality of first wavelength regions incident on the dichroic mirror". According to the image acquisition device according to [3], it is possible to more reliably irradiate the sample with the excitation light for each of the plurality of first wavelength regions.

The image acquisition device according to one aspect of the present disclosure may be [4] "the image acquisition device according to [2] or [3], in which the first optical path switching unit further includes a second multiband pass filter configured to selectively transmit the fluorescent light in the plurality of second wavelength regions emitted from the dichroic mirror". According to the image acquisition device according to [4], the fluorescent light can be more reliably detected in the plurality of second wavelength regions.

The image acquisition device according to one aspect of the present disclosure may be [5] "the image acquisition device according to any one of [1] to [4], in which the optical filter has the transmission characteristic in which the transmittance linearly changes in the fluorescent light wavelength region". According to the image acquisition device according to [5], it is possible to efficiently and accurately acquire matrix data for performing unmixing processing.

The image acquisition device according to one aspect of the present disclosure may be [6] "the image acquisition device according to any one of [1] to [5], in which the optical filter unit includes a first optical filter and a second optical filter, the first optical filter is the optical filter and has a first transmission characteristic as the transmission characteristic, the second optical filter has a second transmission characteristic different from the first transmission characteristic, and the optical filter unit is configured to arrange each of the first optical filter and the second optical filter on the third optical path". According to the image acquisition device according to [6], by detecting fluorescent light through each of the first optical filter and the second optical filter, it is possible to efficiently and accurately acquire matrix data for performing unmixing processing.

The image acquisition device according to one aspect of the present disclosure may be [7] "the image acquisition device according to any one of [1] to [6], in which the optical filter unit is configured to exclude the optical filter from the third optical path". According to the image acquisition device according to [7], by excluding the optical filter from the third optical path after the detection of the fluorescent light for acquiring the matrix data, it is possible to efficiently and accurately detect the fluorescent light for acquiring a plurality of fluorescent light images.

The image acquisition device according to one aspect of the present disclosure may be [8] "the image acquisition device according to any one of [1] to [7], further including an imaging lens arranged on the third optical path and configured to form an image of the fluorescent light on the first light detection unit, in which the optical filter unit is configured to arrange the optical filter on the third optical path between the first optical path switching unit and the imaging lens". According to the image acquisition device according to [8], it is possible to prevent the fluorescent light formed by the imaging lens from being affected by aberration of the optical filter.

The image acquisition device according to one aspect of the present disclosure may be [9] "the image acquisition device according to any one of [1] to [8], further including a fluorescent light filter unit including a light passing portion and a plurality of single band pass filters, in which the light passing portion allows the fluorescent light in the fluorescent light wavelength region to pass therethrough, each of the plurality of single band pass filters selectively transmits the fluorescent light for each of the plurality of second wavelength regions, and the fluorescent light filter unit is configured to arrange the light passing portion and each of the plurality of single band pass filters on the third optical path". According to the image acquisition device according to [9], it is possible to indirectly (that is, by performing unmixing processing) acquire a plurality of fluorescent light images by detecting fluorescent light in a state where the light passing portion is arranged on the third optical path. In addition, the plurality of fluorescent light images can be directly acquired by detecting fluorescent light in a state where each of the plurality of single band pass filters is arranged on the third optical path.

The image acquisition device according to one aspect of the present disclosure may be [10] "the image acquisition device according to [9], further including an image processing unit configured to generate a first fluorescent light image of the sample based on data output from the first light detection unit in a state where the light passing portion is arranged on the first optical path, and generate a second fluorescent light image of the sample based on data output from the first light detection unit in a state where each of the plurality of single band pass filters is arranged on the first optical path, in which the image processing unit sets imaging conditions for generating the second fluorescent light image based on the first fluorescent light image". According to the image acquisition device according to [10], for example, by indirectly acquiring a plurality of fluorescent light images as the first fluorescent light image for an entire region of the sample, it is possible to efficiently grasp a state of the entire region of the sample. Furthermore, for example, by directly acquiring a plurality of fluorescent light images as the second fluorescent light image for a specific region in the sample under the imaging conditions set based on the first fluorescent light image, it is possible to accurately grasp a state of the specific region in the sample.

The image acquisition device according to one aspect of the present disclosure may be [11] "the image acquisition device according to any one of [1] to [9], further including: an irradiation unit configured to irradiate the sample supported by the support unit with the excitation light at a position different from a position in a case where the fluorescent light is detected by the first light detection unit; a second light detection unit configured to detect fluorescent light emitted from the sample by irradiation with the excitation light by the irradiation unit; and a second optical path switching unit arranged on the first optical path and configured to switch the optical path of the excitation light, in which the light emitting unit is optically connected to the second optical path switching unit by a fourth optical path being a part of the first optical path, the first optical path switching unit is optically connected to the second optical path switching unit by a fifth optical path being a part of the first optical path, the irradiation unit is optically connected to the second optical path switching unit by a sixth optical path, and the second optical path switching unit is configured to switch the optical path of the excitation light from the fourth optical path to each of the fifth optical path and the sixth optical path". According to the image acquisition device according to [11], for example, an existence range of the sample on a slide glass can be specified by detecting fluorescent light in the second light detection unit by using the excitation light emitted from the same light emitting unit.

The image acquisition device according to one aspect of the present disclosure may be [12] "the image acquisition device according to [11], in which the second optical path switching unit includes a mirror having a mirror surface arranged on the fourth optical path in a state of being inclined with respect to the fourth optical path, and the second optical path switching unit is configured to rotate the mirror about the fourth optical path as a center line, and switch a state of the mirror to each of a state in which the fourth optical path and the fifth optical path intersect each other on the mirror surface and a state in which the fourth optical path and the sixth optical path intersect each other on the mirror surface". According to the image acquisition device according to [12], it is possible to switch the optical path of the excitation light from the fourth optical path to each of the fifth optical path and the sixth optical path in a space-saving manner.

The image acquisition device according to one aspect of the present disclosure may be [13] "the image acquisition device according to [11] or [12], further including an image processing unit configured to generate a third fluorescent light image of the sample based on data output from the second light detection unit and generate a fourth fluorescent light image of the sample based on data output from the first light detection unit, in which the image processing unit sets imaging conditions for generating the fourth fluorescent light image based on the third fluorescent light image". According to the image acquisition device according to [13], for example, by acquiring the third fluorescent light image for an entire region of the slide glass on which the sample is placed, the existence range of the sample on the slide glass can be specified. Furthermore, for example, by indirectly acquiring a plurality of fluorescent light images as the fourth fluorescent light image for the entire region of the sample under the imaging conditions set based on the third fluorescent light image, the state of the entire region of the sample can be efficiently grasped.

**Advantageous Effects of Invention**

According to the present disclosure, it is possible to provide an image acquisition device capable of efficiently and accurately acquiring a plurality of fluorescent light images separated for each of a plurality of wavelength regions.

**Brief Description of Drawings**

FIG. 1 is a configuration diagram of an image acquisition device according to an embodiment.
FIG. 2 is a configuration diagram of a sample supply unit illustrated in FIG. 1.
FIG. 3 is a configuration diagram of a fluorescent light macro image acquisition unit illustrated in FIG. 1.
FIG. 4 is a configuration diagram of a bright field micro image acquisition unit illustrated in FIG. 1.
FIG. 5 is a diagram for describing a scanning method in the bright field micro image acquisition unit illustrated in FIG. 4.
FIG. 6 is a configuration diagram of a fluorescent light micro image acquisition unit illustrated in FIG. 1.
FIG. 7 is a configuration diagram of a first optical path switching unit illustrated in FIG. 6.
FIG. 8 is a graph illustrating transmission characteristics of a dichroic mirror, a first multiband pass filter, and a second multiband pass filter illustrated in FIG. 7.
FIG. 9 is a configuration diagram of a second optical path switching unit illustrated in FIG. 6.
FIG. 10 is a schematic diagram of the fluorescent light micro image acquisition unit illustrated in FIG. 6.
FIG. 11 is a schematic diagram of the fluorescent light micro image acquisition unit illustrated in FIG. 6.
FIG. 12 is a flowchart illustrating an image processing method in an image processing unit illustrated in FIG. 1.
FIG. 13 is a diagram for describing a method of specifying an imaging region in the image processing unit illustrated in FIG. 1.
FIG. 14 is a schematic diagram of the image acquisition device illustrated in FIG. 1.
FIG. 15 is a block diagram illustrating a hardware configuration of the image processing unit illustrated in FIG. 1.
FIG. 16 is a block diagram illustrating a functional configuration of the image processing unit illustrated in FIG. 1.

FIG. 17 is a diagram illustrating an image of a pixel group clustered by a first clustering function by a clustering unit illustrated in FIG. 16.

FIG. 18 is a graph illustrating wavelength characteristics of absorption rates of excitation light of a plurality of dyes included in a sample.

FIG. 19 is a graph illustrating a distribution of centroid fluorescent light wavelengths specified by the clustering unit illustrated in FIG. 16.

FIG. 20 is a diagram illustrating an image of a pixel group clustered by a second clustering function by the clustering unit illustrated in FIG. 16.

FIG. 21 is a diagram illustrating an image of matrix data and dye matrix data regenerated by a statistical value calculation unit illustrated in FIG. 16.

FIG. 22 is a graph illustrating transmission characteristics of each of a first optical filter and a second optical filter included in an optical filter unit according to a modification.

FIG. 23 is a graph illustrating transmission characteristics of each of a first optical filter and a second optical filter included in an optical filter unit according to a modification.

FIG. 24 is a configuration diagram of an optical filter unit and a first light detection unit according to a modification.

FIG. 25 is a configuration diagram of an optical filter unit and a first light detection unit according to a modification.

FIG. 26 is a configuration diagram of an optical filter unit and a first light detection unit according to a modification.

FIG. 27 is a configuration diagram of an optical filter unit and a first light detection unit according to a modification.

**Description of Embodiments**

Hereinafter, an embodiment of the present disclosure will be described in detail with reference to the drawings. Note that, in the drawings, the same or corresponding parts are denoted by the same reference signs, and redundant description will be omitted.

[Configuration of Image Acquisition Device]

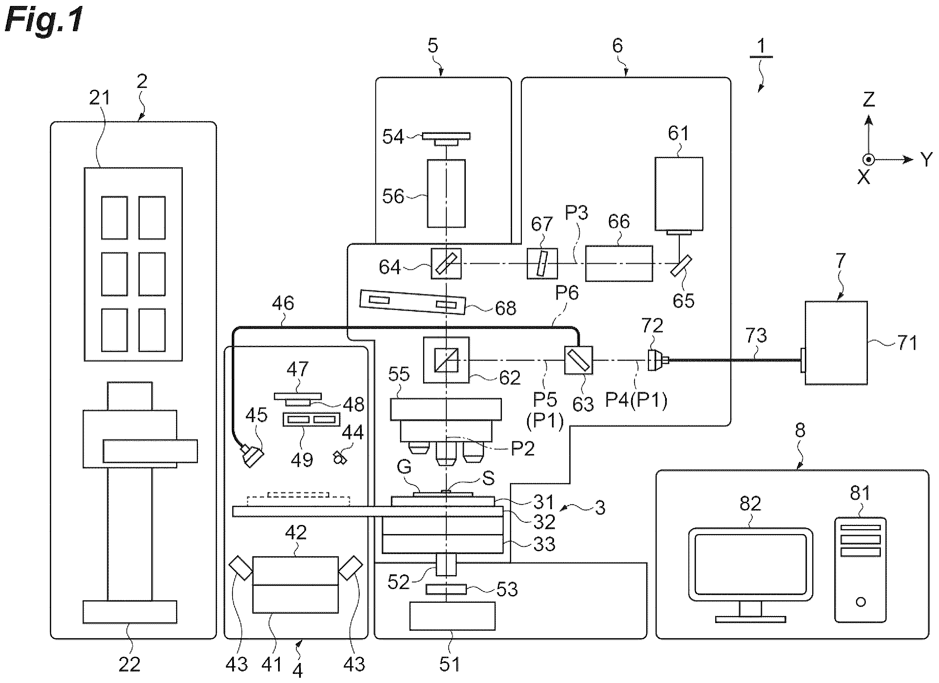

As illustrated in FIG. 1, the image acquisition device 1 includes a sample supply unit 2, a sample support unit 3, a fluorescent light macro image acquisition unit 4, a bright field micro image acquisition unit 5, a fluorescent light micro image acquisition unit 6, an excitation light source 7, and an image processing device 8. The sample supply unit 2, the sample support unit 3, the fluorescent light macro image acquisition unit 4, the bright field micro image acquisition unit 5, and the fluorescent light micro image acquisition unit 6 are configured in a same housing. In the image acquisition device 1, a sample S (for example, a pathological cell stained with a plurality of fluorescent light dyes, and the like) is handled in a state of being placed on a slide glass G, and various images of the sample S are acquired. Hereinafter, unless otherwise specified, the "slide glass G on which the sample S is placed" is simply referred to as a "slide glass G". A predetermined horizontal direction is referred to as an X-axis direction, a horizontal direction perpendicular to the X-axis direction is referred to as a Y-axis direction, and a vertical direction is referred to as a Z-axis direction.

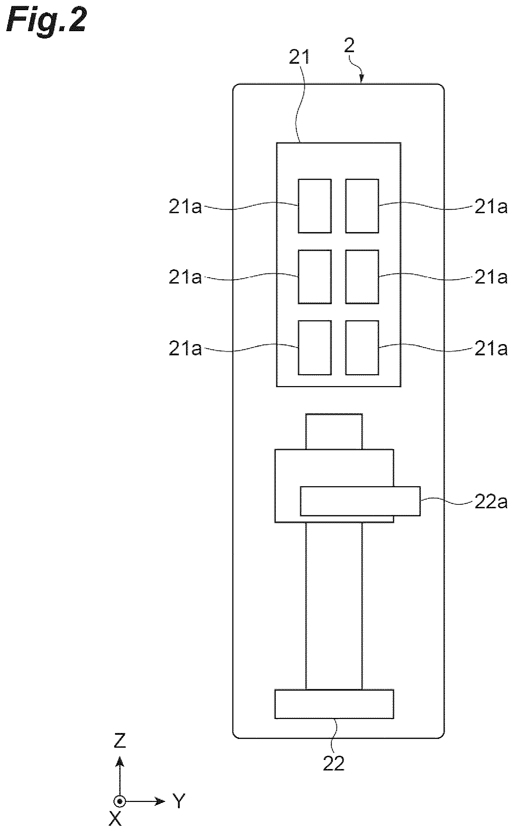

As illustrated in FIGS. 1 and 2, the sample supply unit 2 includes a cassette rack 21 and a transport stage 22. The cassette rack 21 is provided with a plurality of cassettes 21a. Each cassette 21a houses a plurality of slide glasses G. The transport stage 22 is provided with a grip portion 22a. The grip portion 22a grips the slide glass G. The transport stage 22 moves the grip portion 22a in each of the X-axis direction, the Y-axis direction, and the Z-axis direction. In the image acquisition device 1, the grip portion 22a is moved by the transport stage 22 in a state where the slide glass G is gripped by the grip portion 22a, so that the slide glass G (that is, the sample S) is transported between each cassette 21a and the sample support unit 3.

As illustrated in FIG. 1, the sample support unit 3 includes a support unit 31, a switching stage 32, and a moving stage 33. The support unit 31 is attached to an upper side of the switching stage 32. The support unit 31 supports the slide glass G by holding the slide glass G. That is, the support unit 31 supports the sample S. The switching stage 32 is attached to an upper side of the moving stage 33. The switching stage 32 moves the support unit 31 between the fluorescent light macro image acquisition unit 4 and the bright field micro image acquisition unit 5 (also corresponding to the fluorescent light micro image acquisition unit 6). The moving stage 33 moves the switching stage 32 in each of the X-axis direction and the Y-axis direction in the bright field micro image acquisition unit 5 (also corresponding to the fluorescent light micro image acquisition unit 6).

In the image acquisition device 1, the support unit 31 is moved by the switching stage 32 in a state where the slide glass G is supported by the support unit 31, so that the slide glass G (that is, the sample S) is transported between the fluorescent light macro image acquisition unit 4 and the bright field micro image acquisition unit 5 (also corresponding to the fluorescent light micro image acquisition unit 6). In addition, in the image acquisition device 1, in the bright field micro image acquisition unit 5 (also corresponding to the fluorescent light micro image acquisition unit 6), the switching stage 32 is moved by the moving stage 33 in a state where the slide glass G is supported by the support unit 31, so that a field of view of an objective lens 55a described later is scanned with respect to the sample S.

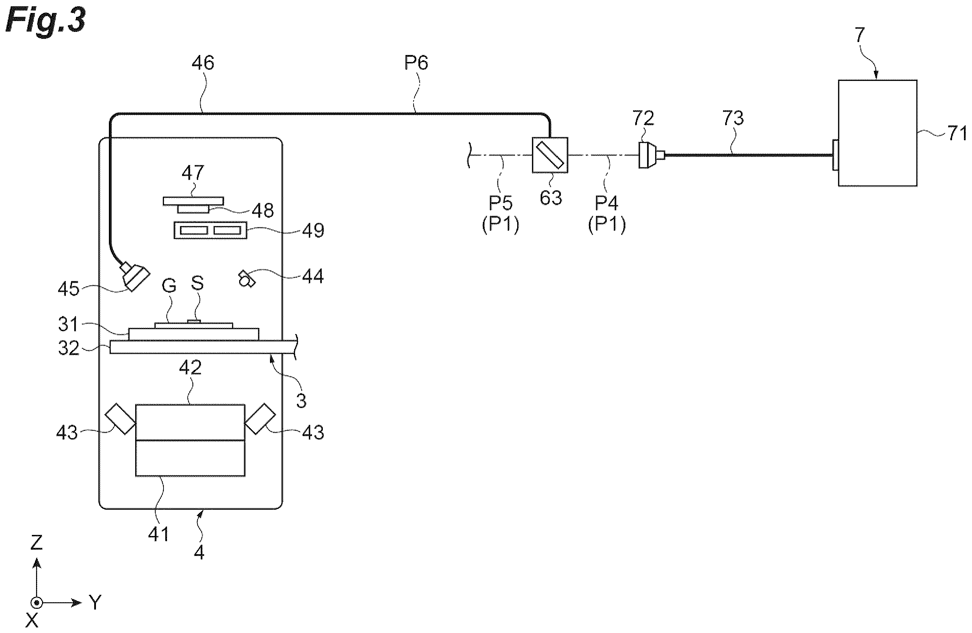

As illustrated in FIGS. 1 and 3, the fluorescent light macro image acquisition unit 4 includes a bright field light source 41, a shutter 42, a plurality of dark field light sources 43, a barcode imaging light source 44, an irradiation unit 45, an optical fiber 46, a light detection unit (second light detection unit) 47, an imaging lens 48, and a filter switching mechanism 49. The bright field light source 41 is arranged below the switching stage 32. The bright field light source 41 emits light at the time of bright field image acquisition. The light emitted from the bright field light source 41 is emitted onto the sample S through an opening formed in the switching stage 32, an opening formed in the support unit 31, and the slide glass G. The bright field light source 41 is, for example, a white light source such as an LED that emits white light via a diffusion plate. The shutter 42 is arranged between the bright field light source 41 and the switching stage 32 at a time other than the time of bright field image acquisition.

A plurality of dark field light sources 43 are arranged below the switching stage 32. The plurality of dark field light sources 43 emit light at the time of dark field image acquisition. The sample S is irradiated with the light emitted from the dark field light sources 43 from obliquely above. Each dark field light source 43 is, for example, a white light source such as an LED that emits white light. The barcode imaging light source 44 emits light toward the slide glass G when acquiring information from a barcode attached to the slide glass G. The irradiation unit 45 irradiates the sample S supported by the support unit 31 with excitation light in the fluorescent light macro image acquisition unit 4 (a position different from a position in a case where fluorescent light is detected by the light detection unit 61 of the fluorescent light micro image acquisition unit 6). The irradiation unit 45 irradiates the slide glass G with excitation light at the time of fluorescent light macro image acquisition. The excitation light is emitted from the excitation light source 7 and guided to the irradiation unit 45 by the optical fiber 46.

The light detection unit 47 is arranged above the switching stage 32. The light detection unit 47 detects the fluorescent light emitted from the sample S by the irradiation with the excitation light by the irradiation unit 45. In addition, the light detection unit 47 detects light emitted from the bright field light source 41 and transmitted through the sample S, light emitted from the plurality of dark field light sources 43 and reflected by the sample S, and light emitted from the barcode imaging light source 44 and reflected by the barcode of the slide glass G. The light detection unit 47 is, for example, an area image sensor that captures an entire image of the slide glass G. In this case, the light detection unit 47 may be a color area image sensor or a monochrome area image sensor.

The imaging lens 48 is attached to a lower side of the light detection unit 47. The imaging lens 48 forms the entire image of the slide glass G on the light detection unit 47. The filter switching mechanism 49 is arranged between the switching stage 32 and the imaging lens 48. The filter switching mechanism 49 includes a light passing portion and a plurality of multiband pass filters. The light passing portion is, for example, an opening formed in the filter switching mechanism 49. At the time of bright field image acquisition and dark field image acquisition, the light passing portion of the filter switching mechanism 49 is arranged on an optical axis of the light detection unit 47. At the time of fluorescent light macro image acquisition, each multiband pass filter of the filter switching mechanism 49 is arranged on the optical axis of the light detection unit 47. As an example, the filter switching mechanism 49 is a rotation type switching mechanism (for example, a filter wheel or the like), a linear motion type switching mechanism (for example, a slider or the like), or the like.

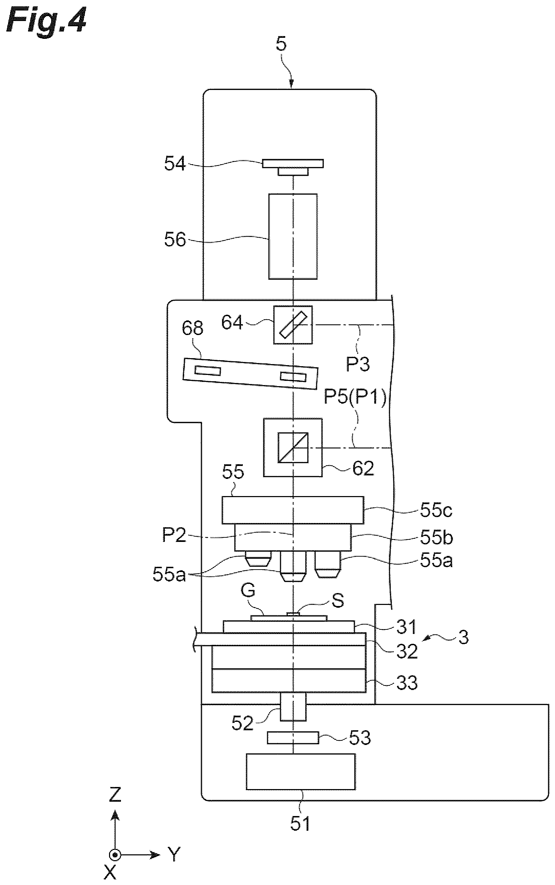

As illustrated in FIGS. 1 and 4, the bright field micro image acquisition unit 5 includes a bright field light source 51, a bright field optical system 52, a shutter 53, a light detection unit 54, an objective lens unit 55, and an imaging lens 56. The bright field light source 51 is arranged below the switching stage 32 and the moving stage 33. The bright field light source 51 emits light at the time of bright field micro image acquisition. The light emitted from the bright field light source 51 is emitted to the sample S via the bright field optical system 52, an opening formed in the moving stage 33, the opening formed in the switching stage 32, the opening formed in the support unit 31, and the slide glass G. The bright field light source 51 is, for example, a white light source such as an LED that emits white light. The bright field optical system 52 guides light emitted from the bright field light source 51 and irradiates the entire slide glass G with the guided light. The shutter 53 is arranged between the bright field light source 51 and the bright field optical system 52 at the time other than the bright field micro image acquisition.

The objective lens unit 55 is composed of a plurality of objective lenses 55a, a moving stage 55b, and a switching stage 55c. The plurality of objective lenses 55a are attached to a lower side of the moving stage 55b. The moving stage 55b is attached to a lower side of the switching stage 55c. In the bright field micro image acquisition unit 5, any one of the objective lenses 55a is arranged on an optical axis of the light detection unit 54 by rotation of the switching stage 55c. In addition, in the bright field micro image acquisition unit 5, the objective lens 55a arranged on the optical axis of the light detection unit 54 is moved in the Z-axis direction by the moving stage 55b, so that a focal point of the objective lens 55a arranged on the optical axis of the light detection unit 54 is aligned with the sample S. The magnification of each objective lens 55a is, for example, 10 times, 20 times, or 40 times. As an example, the switching stage 55c is a rotation type stage, a linear motion type stage, or the like.

The light detection unit 54 detects the light emitted from the bright field light source 51 and transmitted through the sample S. The light detection unit 54 captures an image of a visual field of the objective lens 55a arranged on the optical axis of the light detection unit 54. The light detection unit 54 is, for example, a color area image sensor. The light detection unit 54 may be a three-plate area image sensor or a linear image sensor. The imaging lens 56 forms the image of the visual field of the objective lens 55a arranged on the optical axis of the light detection unit 54 on the light detection unit 54. The imaging lens 56 is, for example, a tube lens. At the time of bright field micro image acquisition, an optical path switching unit 62 and a mirror 64 to be described later are excluded from the optical axis of the light detection unit 54, and a light passing portion (opening) of a fluorescent light filter unit 68 to be described later is arranged on the optical axis of the light detection unit 54.

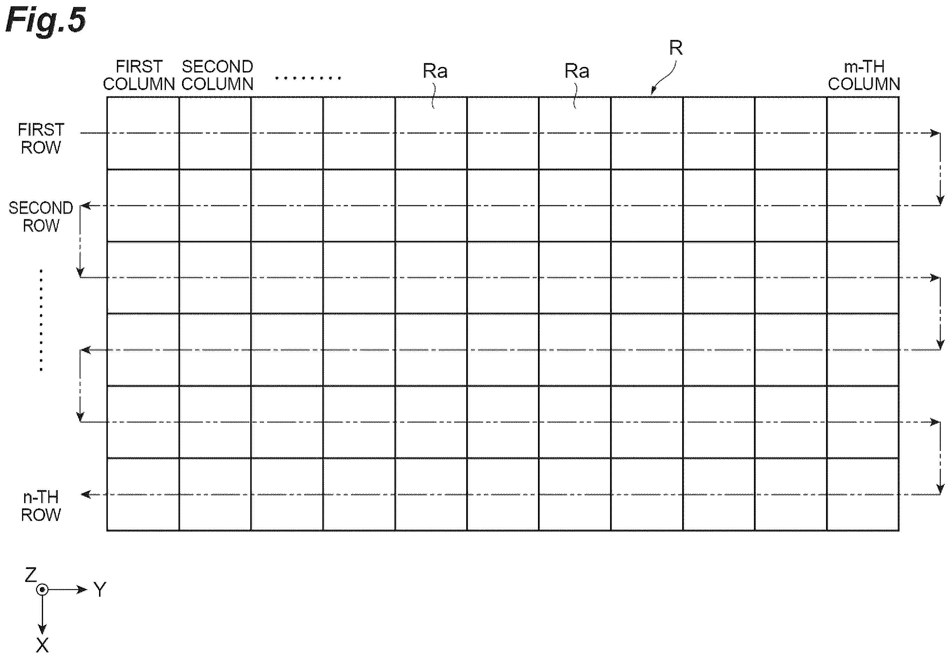

A scanning method in the bright field micro image acquisition unit 5 is as follows. As illustrated in FIG. 5, in a predetermined imaging region R, the visual field of the objective lens 55a is moved in the Y-axis direction from a region Ra of a first row and a first column to a region Ra of the first row and an m-th column (m is an integer of 2 or more). At this time, every time the visual field of the objective lens 55a reaches each region Ra of the first row, the bright field light source 51 is caused to perform strobe light emission, and an image of each region Ra of the first row is transmitted from the light detection unit 54 to the image processing device 8. Subsequently, the visual field of the objective lens 55a is moved in the Y-axis direction from a region Ra of a second row and the m-th column to a region Ra of the second row and the first column, and similarly, an image of each region Ra of the second row is transmitted from the light detection unit 54 to the image processing device 8. Similarly, the movement of the visual field of the objective lens 55a and the imaging and transmission of the image of each region Ra are performed up to an n-th row (n is an integer of 2 or more). In the image processing device 8, the images of all the regions Ra constituting the imaging region R are connected, and a bright field micro image of the imaging region R is generated.

In the above-described scanning method, the movement of the visual field of the objective lens 55a is performed by moving the switching stage 32 by the moving stage 33 in a state where the slide glass G is supported by the support unit 31. In the scanning method described above, the alignment of the focal point of the objective lens 55a with respect to the sample S is performed by, for example, a focus map method or a dynamic focus method. Note that, instead of the strobe light emission of the bright field light source 51, the shutter 53 may be opened and closed in a state where the bright field light source 51 is continuously turned on. In addition, the movement of the visual field of the objective lens 55a may be stopped every time the visual field of the objective lens 55a reaches each region Ra, and the image of each region Ra may be captured by the light detection unit 54 every time the movement of the visual field of the objective lens 55a is stopped (tiling scan). In addition, a linear image sensor may be used as the light detection unit 54, and the movement of the visual field of the objective lens 55a and the imaging by the light detection unit 54 may be continuously performed. In addition, the visual field of the objective lens 55a may be moved in the same direction in all the rows from all the first to n-th rows. The above matters related to the scanning method are also applied to the fluorescent light micro image acquisition unit 6. However, the tiling scan described above is suitable as the scanning method in the fluorescent light micro image acquisition unit 6.

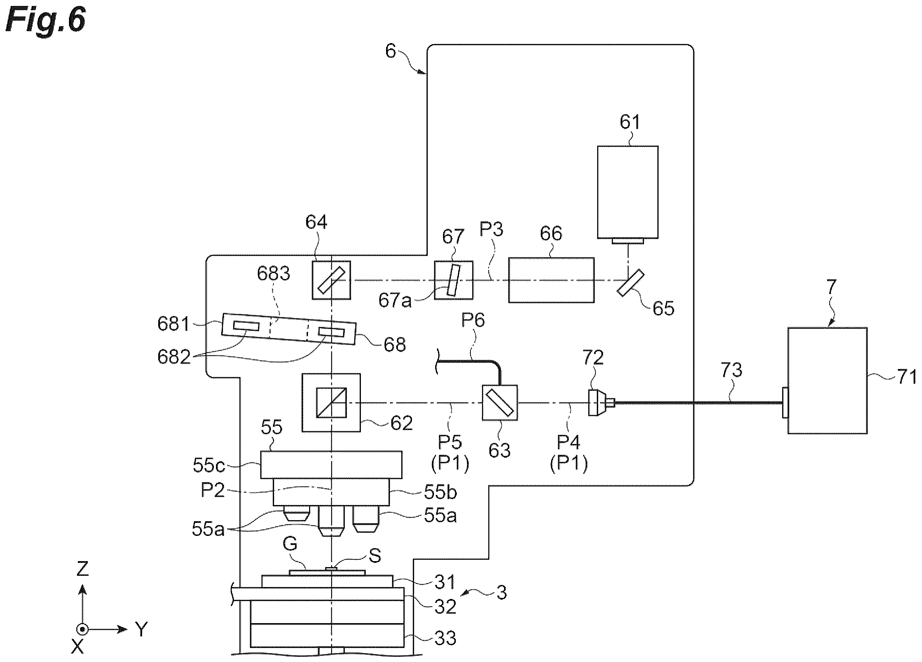

As illustrated in FIGS. 1 and 6, the fluorescent light micro image acquisition unit 6 includes the light detection unit (first light detection unit) 61, the optical path switching unit (first optical path switching unit) 62, an optical path switching unit (second optical path switching unit) 63, the mirror 64, a mirror 65, an imaging lens 66, an optical filter unit 67, and the fluorescent light filter unit 68. A light emitting unit 72 of the excitation light source 7 is optically connected to the optical path switching unit 62 by a first optical path P1. The support unit 31 is optically connected to the optical path switching unit 62 by a second optical path P2. The light detection unit 61 is optically connected to the optical path switching unit 62 by a third optical path P3. That is, the first optical path P1 extends between the light emitting unit 72 and the optical path switching unit 62, the second optical path P2 extends between the support unit 31 and the optical path switching unit 62, and the third optical path P3 extends between the light detection unit 61 and the optical path switching unit 62.

As an example, in the fluorescent light micro image acquisition unit 6, the first optical path P1 extends in the Y-axis direction between the light emitting unit 72 and the optical path switching unit 62. The second optical path P2 extends in the Z-axis direction between the optical path switching unit 62 and the support unit 31. The third optical path P3 extends in the Z-axis direction between the optical path switching unit 62 and the mirror 64, extends in the Y-axis direction between the mirror 64 and the mirror 65, and extends in the Z-axis direction between the mirror 65 and the light detection unit 61.

The excitation light emitted from the light emitting unit 72 is incident on the optical path switching unit 62 along the first optical path P1. The excitation light incident on the optical path switching unit 62 is reflected by the optical path switching unit 62, travels along the second optical path P2, and is emitted to the sample S supported by the support unit 31. At this time, the excitation light passes through the objective lens 55a of the objective lens unit 55 arranged on the second optical path P2. The fluorescent light emitted from the sample S by the irradiation with the excitation light is incident on the optical path switching unit 62 along the second optical path P2. At this time, the fluorescent light passes through the objective lens 55a of the objective lens unit 55 arranged on the second optical path P2. The fluorescent light incident on the optical path switching unit 62 is transmitted through the optical path switching unit 62, travels along the third optical path P3, and is detected by the light detection unit 61.

As described above, the light detection unit 61 detects the fluorescent light emitted from the sample S by the irradiation with the excitation light. The light detection unit 61 is, for example, a monochrome area image sensor. The light detection unit 61 may be a color area image sensor or a color separation sensor (multi-spectral sensor, hyperspectral sensor, and the like). When the color separation sensor is used as the light detection unit 61, it is easy to cope with a case where the number of dyes is large (for example, in the case of 10 colors or more). The light detection unit 61 may be a linear image sensor.

As described above, the optical path switching unit 62 switches the optical path of the excitation light and the optical path of the fluorescent light. The optical path switching unit 62 is configured to switch the optical path of the excitation light in the plurality of first wavelength regions different from each other from first optical path P1 to second optical path P2, and switch the optical path of the fluorescent light in the plurality of second wavelength regions shifted from the plurality of first wavelength regions from the second optical path P2 to the third optical path P3. The plurality of first wavelength regions different from each other refer to a plurality of wavelength regions separated from each other. The plurality of second wavelength regions shifted from the plurality of first wavelength regions refer to a plurality of wavelength regions that do not substantially overlap with the plurality of first wavelength regions and are separated from each other. Each of the plurality of first wavelength regions and each of the plurality of second wavelength regions are alternately arranged.

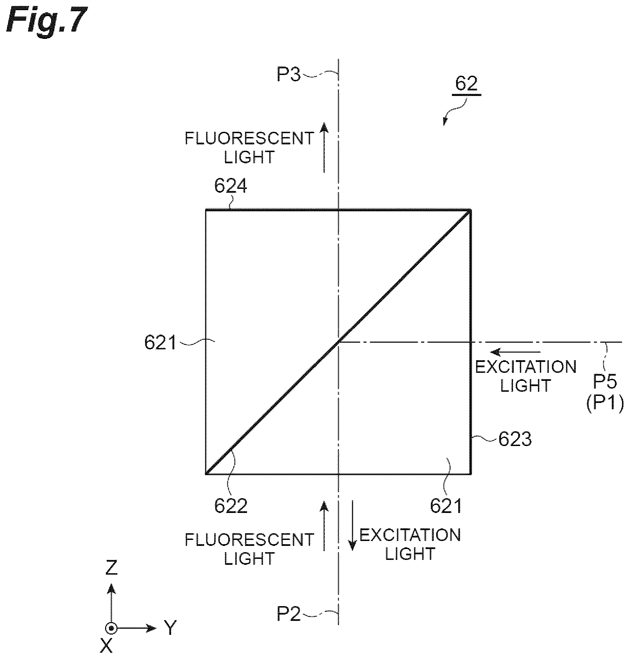

A specific configuration of the optical path switching unit 62 is as follows. As illustrated in FIG. 7, the optical path switching unit 62 is configured in a cubic shape by combining a pair of triangular prism-shaped light transmitting members 621. A dichroic mirror 622 is formed on a boundary surface between the pair of light transmitting members 621. The boundary surface of the pair of light transmitting members 621 is a surface perpendicular to a surface including the first optical path P1, the second optical path P2, and the third optical path P3, and is a surface inclined with respect to respective optical paths of the first optical path P1, the second optical path P2, and the third optical path P3. The dichroic mirror 622 selectively reflects the excitation light in the plurality of first wavelength regions, and selectively transmits the fluorescent light in the plurality of second wavelength regions. That is, the dichroic mirror 622 substantially has a function of reflecting only the excitation light in the plurality of first wavelength regions and a function of transmitting only the fluorescent light in the plurality of second wavelength regions. The dichroic mirror 622 is, for example, a dielectric multilayer film.

A multiband pass filter (first multiband pass filter) 623 is formed on a surface perpendicular to the first optical path P1 in the surface of one light transmitting member 621. The multiband pass filter 623 selectively transmits the excitation light in the plurality of first wavelength regions incident on the dichroic mirror 622. That is, the multiband pass filter 623 substantially has a function of transmitting only the excitation light in the plurality of first wavelength regions. The multiband pass filter 623 is, for example, a dielectric multilayer film.

A multiband pass filter (second multiband pass filter) 624 is formed on a surface perpendicular to the third optical path P3 in the surface of the other light transmitting member 621. The multiband pass filter 624 selectively transmits the fluorescent light in the plurality of second wavelength regions emitted from the dichroic mirror 622. That is, the multiband pass filter 624 substantially has a function of transmitting only fluorescent light in the plurality of second wavelength regions. The multiband pass filter 624 is, for example, a dielectric multilayer film.

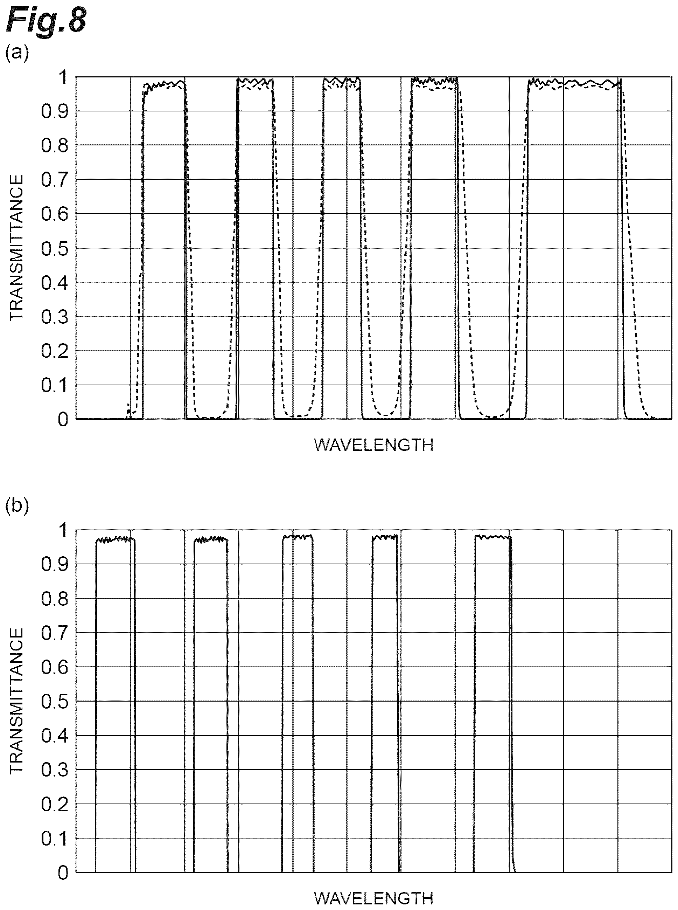

(a) of FIG. 8 is a graph illustrating a transmission characteristic (a transmission characteristic indicated by a broken line) of the dichroic mirror 622 and a transmission characteristic (a transmission characteristic indicated by a solid line) of the multiband pass filter 624, and (b) of FIG. 8 is a graph illustrating a transmission characteristic of the multiband pass filter 623. As illustrated in (a) and (b) of FIG. 8, the selective transmission of the fluorescent light in the plurality of second wavelength regions is reliably realized by the dichroic mirror 622 and the multiband pass filter 624, and the selective transmission of the excitation light in the plurality of first wavelength regions is reliably realized by the dichroic mirror 622 and the multiband pass filter 623.

The fluorescent light micro image acquisition unit 6 includes a plurality of optical path switching units 62 having different specifications (the number of wavelength regions, an upper limit value of the wavelength region, a lower limit value of the wavelength region, and the like), and is configured such that any one of the optical path switching units 62 is arranged at a position where the first optical path P1, the second optical path P2, and the third optical path P3 intersect each other. In addition, the fluorescent light micro image acquisition unit 6 is configured to enable attachment and detachment (replacement) of each optical path switching unit 62.

As illustrated in FIGS. 1 and 6, the optical path switching unit 63 is arranged on the first optical path P1. The optical path switching unit 63 switches the optical path of the excitation light emitted from the light emitting unit 72. The light emitting unit 72 is optically connected to the optical path switching unit 63 by a fourth optical path P4 which is a part of the first optical path P1. The optical path switching unit 62 is optically connected to the optical path switching unit 63 by a fifth optical path P5 which is a part of the first optical path P1. The irradiation unit 45 of the fluorescent light macro image acquisition unit 4 is optically connected to the optical path switching unit 63 by a sixth optical path P6. That is, the fourth optical path P4 extends between the light emitting unit 72 and the optical path switching unit 63, the fifth optical path P5 extends between the optical path switching unit 63 and the optical path switching unit 62, and the sixth optical path P6 extends between the optical path switching unit 63 and the irradiation unit 45.

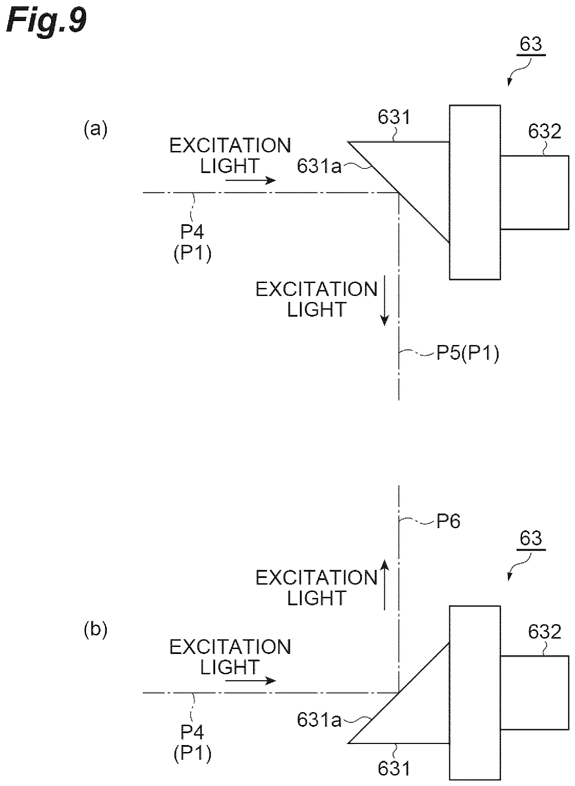

The optical path switching unit 63 is configured to switch the optical path of the excitation light from the fourth optical path P4 to each of the fifth optical path P5 and the sixth optical path P6. More specifically, as illustrated in (a) and (b) of FIG. 9, the optical path switching unit 63 includes a mirror 631 having a mirror surface 631a. The mirror surface 631a is arranged on the fourth optical path P4 in a state of being inclined with respect to the fourth optical path P4. The optical path switching unit 63 is configured to rotate the mirror 631 about the fourth optical path P4 as a center line. The optical path switching unit 63 rotates the mirror 631 to switch the state of the mirror 631 to each of a state in which the fourth optical path P4 and the fifth optical path P5 intersect each other on the mirror surface 631a (a state illustrated in (a) of FIG. 9) and a state in which the fourth optical path P4 and the sixth optical path P6 intersect each other on the mirror surface 631a (a state illustrated in (b) of FIG. 9). Note that the optical path switching unit 63 may be configured to switch the optical path of the excitation light from the fourth optical path P4 to each of the fifth optical path P5 and the sixth optical path P6 by switching between the arrangement of the mirror on the first optical path P1 and the exclusion of the mirror from the first optical path P1 by, for example, a linear motion mechanism.

As illustrated in FIGS. 1 and 6, the mirror 64 is arranged on the third optical path P3. The mirror 65 is arranged on the third optical path P3 between the mirror 64 and the light detection unit 61. The mirror 64 reflects the fluorescent light in the plurality of second wavelength regions emitted from the optical path switching unit 62 toward the mirror 65. The mirror 65 reflects the fluorescent light in the plurality of second wavelength regions reflected by the mirror 64 toward the light detection unit 61 and causes the fluorescent light to be incident on the light detection unit 61. The imaging lens 66 is arranged on the third optical path P3 between the mirror 64 and the mirror 65. The imaging lens 66 forms an image of fluorescent light in the plurality of second wavelength regions on the light detection unit 61. In other words, the imaging lens 66 forms the image of visual field of the objective lens 55a arranged on the first optical path P1 on the light detection unit 61. The imaging lens 66 is, for example, a tube lens.

The optical filter unit 67 includes an optical filter 67a. The optical filter 67a transmits the fluorescent light in the plurality of second wavelength regions. The optical filter unit 67 is configured to arrange the optical filter 67a on the third optical path P3 between the optical path switching unit 62 and the imaging lens 66. On the other hand, the optical filter unit 67 is configured to exclude the optical filter 67a from the third optical path P3 between the optical path switching unit 62 and the imaging lens 66. The optical filter unit 67 arranges the optical filter 67a on the third optical path P3 when acquiring "matrix data for performing unmixing processing" to be described later, and excludes the optical filter 67a from the third optical path P3 when acquiring a fluorescent light micro image.

The optical filter 67a has a transmission characteristic in which transmittance changes in a fluorescent light wavelength region including a plurality of second wavelength regions (hereinafter, simply referred to as a "fluorescent light wavelength region"). The optical filter 67a has a transmission characteristic in which the wavelength and the transmittance correspond to each other on a one-to-one basis in the fluorescent light wavelength region. The optical filter 67a has a transmission characteristic in which the transmittance linearly changes in the fluorescent light wavelength region.

The fluorescent light filter unit 68 includes a switching mechanism main body 681, a plurality of single band pass filters 682, and a light passing portion 683. Each single band pass filter 682 is arranged in each of a plurality of openings formed in the switching mechanism main body 681. Each single band pass filter 682 selectively transmits the fluorescent light for each of the plurality of second wavelength regions. That is, one single band pass filter 682 substantially has a function of transmitting only fluorescent light in one second wavelength region. The light passing portion 683 is the opening formed in the switching mechanism main body 681, and allows fluorescent light in a fluorescent light wavelength region to pass therethrough. The light passing portion 683 is a light transmitting member having a transmission characteristic that allows the fluorescent light in the fluorescent light wavelength region to pass therethrough, and may be arranged in the opening formed in the switching mechanism main body 681. The fluorescent light filter unit 68 is configured such that the light passing portion 683 and each of the plurality of single band pass filters 682 are arranged on the third optical path P3 (third optical path P3 between the optical path switching unit 62 and the mirror 64) by switching the switching mechanism main body 681. As an example, the switching mechanism main body 681 is a rotation type switching mechanism (for example, a filter wheel or the like), a linear motion type switching mechanism (for example, a slider or the like), or the like.

As illustrated in FIG. 1, the excitation light source 7 includes a light output unit 71, a light emitting unit 72, and an optical fiber 73. The light output unit 71 outputs excitation light for each of the plurality of first wavelength regions. The light emitting unit 72 emits the excitation light output from the light output unit 71 and guided by the optical fiber 73 along the first optical path P1. The image processing device 8 includes an image processing unit 81 and a display unit 82. The image processing unit 81 is a computer, and executes various processing described later. The display unit 82 is a display, and displays various images of the sample S.

[Imaging in Sedat arrangement and imaging in Pinkel arrangement]

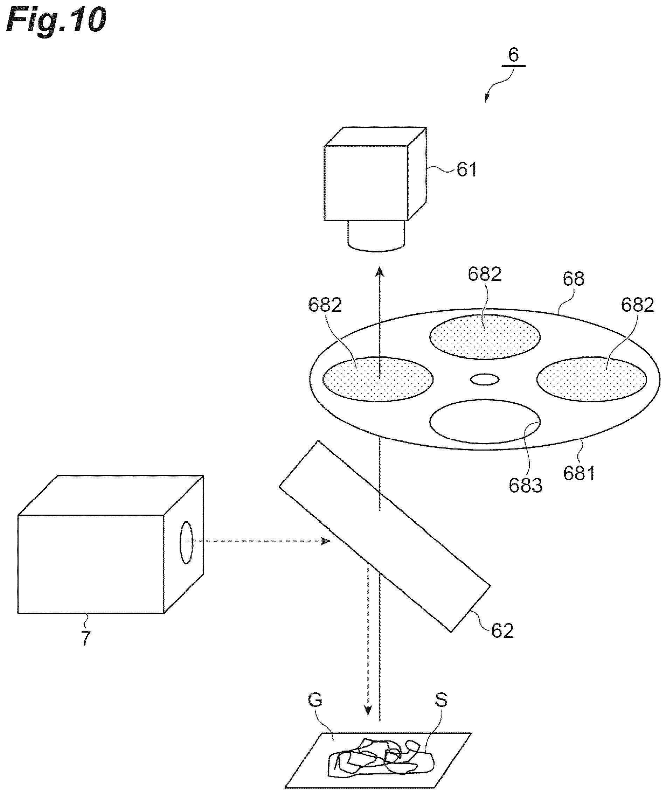

In the fluorescent light micro image acquisition unit 6, imaging in a Sedat arrangement and imaging in a Pinkel arrangement are performed. The imaging in the Sedat arrangement is as follows. First, as illustrated in FIG. 10, one single band pass filter 682 that selectively transmits fluorescent light in one second wavelength region corresponding to excitation light in one first wavelength region is arranged on an optical path between the optical path switching unit 62 and the light detection unit 61. In this state, the excitation light of the one first wavelength region (dashed arrow in FIG. 10) is emitted from the excitation light source 7, and the excitation light of the one first wavelength region is reflected by the optical path switching unit 62 and emitted to the sample S. Then, the fluorescent light (solid arrow in FIG. 10) emitted from the sample S by the irradiation with the one excitation light is transmitted through the one single band pass filter 682 via the optical path switching unit 62, so that only the fluorescent light in the one second wavelength region is incident on the light detection unit 61 and detected by the light detection unit 61.

Subsequently, another single band pass filter 682 that selectively transmits fluorescent light in another second wavelength region corresponding to excitation light in another first wavelength region is arranged on an optical path between the optical path switching unit 62 and the light detection unit 61. In this state, the excitation light of the other first wavelength region is emitted from the excitation light source 7, and the excitation light of the other first wavelength region is reflected by the optical path switching unit 62 and emitted to the sample S. Then, the fluorescent light emitted from the sample S by the irradiation with the other excitation light is transmitted through the other single band pass filter 682 via the optical path switching unit 62, so that only the fluorescent light in the other second wavelength region is incident on the light detection unit 61 and is detected by the light detection unit 61. Similarly, fluorescent light in each of the plurality of second wavelength regions corresponding to excitation light in each of the plurality of first wavelength regions is detected, and the image processing unit 81 directly generates a plurality of fluorescent light images separated for each of the plurality of wavelength regions.

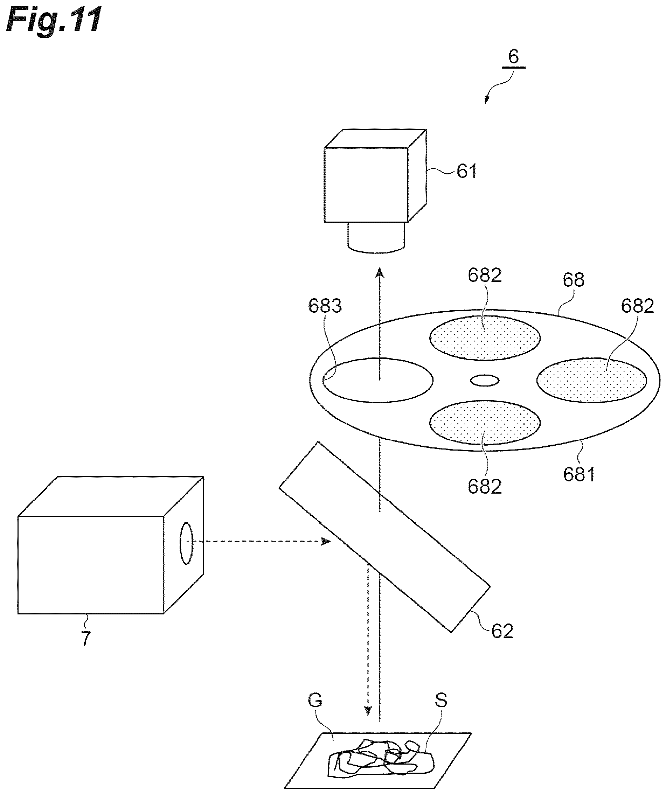

The imaging in the imaging in the Pinkel arrangement is as follows. First, as illustrated in FIG. 11, the light passing portion 683 as an opening is arranged on an optical path between the optical path switching unit 62 and the light detection unit 61. In this state, excitation light of one first wavelength region (dashed arrow in FIG. 11) is emitted from the excitation light source 7, and the excitation light of the one first wavelength region is reflected by the optical path switching unit 62 and emitted to the sample S. Then, fluorescent light (solid arrow in FIG. 11) emitted from the sample S by the irradiation with the one excitation light passes through the light passing portion 683 via the optical path switching unit 62, so that fluorescent light including fluorescent light of one second wavelength region corresponding to the excitation light of the one first wavelength region is incident on the light detection unit 61 and is detected by the light detection unit 61.

Subsequently, in a state where the light passing portion 683 is arranged on the optical path between the optical path switching unit 62 and the light detection unit 61, excitation light in another first wavelength region is emitted from the excitation light source 7, and the excitation light in the other first wavelength region is reflected by the optical path switching unit 62 and emitted to the sample S. Then, fluorescent light emitted from the sample S by the irradiation with another excitation light passes through the light passing portion 683 via the optical path switching unit 62, whereby fluorescent light including fluorescent light in another second wavelength region corresponding to the excitation light in the other first wavelength region is incident on the light detection unit 61 and is detected by the light detection unit 61. Similarly, fluorescent light including fluorescent light in each of the plurality of second wavelength regions corresponding to excitation light in each of the plurality of first wavelength regions is detected, and the image processing unit 81 indirectly (that is, by performing unmixing processing to be described later) generates a plurality of fluorescent light images separated for each of a plurality of wavelength regions.

[Function of Image Processing Unit]

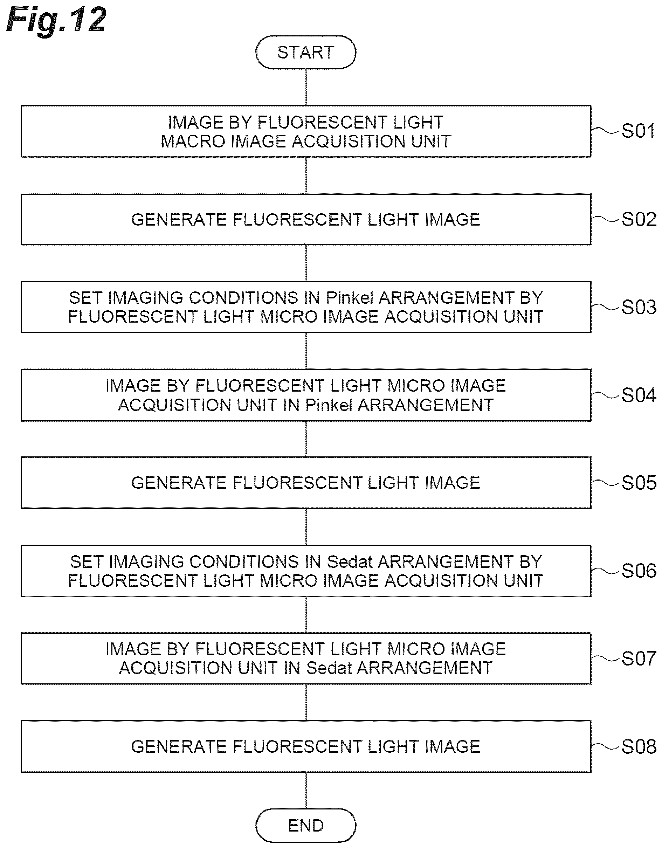

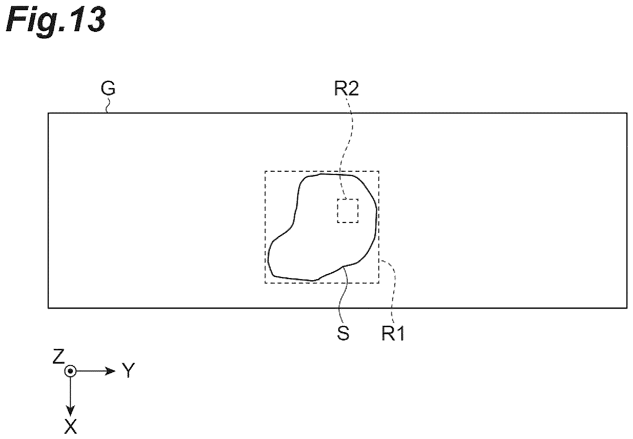

As illustrated in FIG. 12, the image processing unit 81 causes the fluorescent light macro image acquisition unit 4 to perform imaging (step S01). Subsequently, the image processing unit 81 generates a fluorescent light macro image (third fluorescent light image) of the sample S based on data output from the light detection unit 47 of the fluorescent light macro image acquisition unit 4 (step S02). Here, the fluorescent light macro image is generated for an entire region of the slide glass G on which the sample S is placed. Subsequently, the image processing unit 81 sets imaging conditions (imaging conditions for generating a fourth fluorescent light image) in the Pinkel arrangement by the fluorescent light micro image acquisition unit 6 based on the fluorescent light macro image of the slide glass G (step S03). As the imaging conditions in the Pinkel arrangement, as illustrated in FIG. 13, an existence range of the sample S on the slide glass G is set as a scan range R1. In addition, a plurality of (for example, 9 points) focus measurement positions, an exposure time, and the like in the scan range R1 are set as the imaging conditions in the Pinkel arrangement.

Subsequently, as illustrated in FIG. 12, the image processing unit 81 causes the fluorescent light micro image acquisition unit 6 to perform imaging in the Pinkel arrangement (step S04). Subsequently, the image processing unit 81 generates fluorescent light micro images (fourth fluorescent light image and first fluorescent light image) of the sample S in the Pinkel arrangement based on data output from the light detection unit 61 of the fluorescent light micro image acquisition unit 6 (step S05). Here, a plurality of fluorescent light micro images separated for each of a plurality of wavelength regions are indirectly generated for an entire region of the sample S. Subsequently, the image processing unit 81 sets imaging conditions (imaging conditions for generating a second fluorescent light image) in the Sedat arrangement by the fluorescent light micro image acquisition unit 6 based on the fluorescent light micro images of the sample S in the Pinkel arrangement (step S06). As the imaging conditions in the Sedat arrangement, a specific region in the sample S is set as a scan range R2 as illustrated in FIG. 13.

Subsequently, as illustrated in FIG. 12, the image processing unit 81 causes the fluorescent light micro image acquisition unit 6 to perform imaging in the Sedat arrangement (step S07). Subsequently, the image processing unit 81 generates a fluorescent light micro image (second fluorescent light image) of the sample S in the Sedat arrangement based on the data output from the light detection unit 61 of the fluorescent light micro image acquisition unit 6 (step S08). Here, for the specific region in the sample S, a plurality of fluorescent light micro images separated for each of a plurality of wavelength regions are directly generated.

[Unmixing Processing Accompanying Imaging in Pinkel Arrangement]

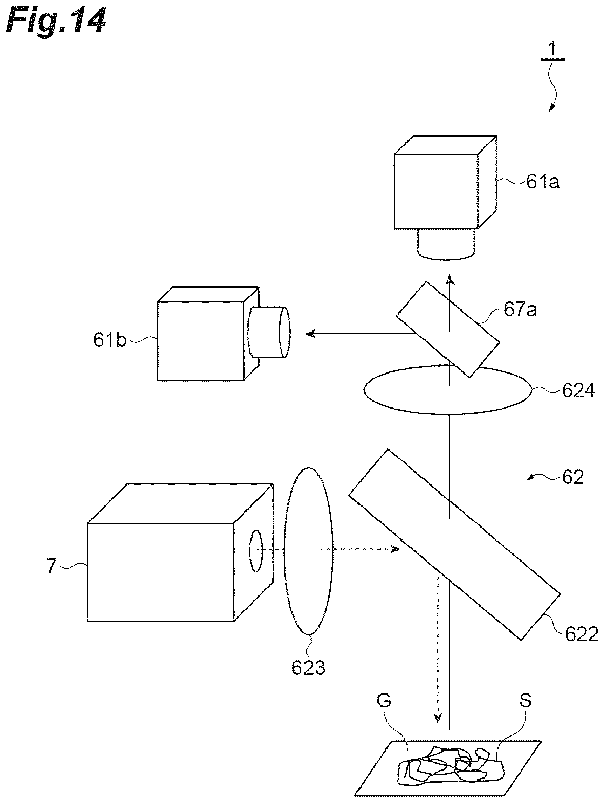

FIG. 14 is a perspective view illustrating a configuration of the image acquisition device 1. In FIG. 14, an optical path of the excitation light is indicated by a dotted line with an arrow, and an optical path of the fluorescent light is indicated by a solid line with an arrow. The image acquisition device 1 includes an excitation light source 7, the multiband pass filter 623, the dichroic mirror 622, the multiband pass filter 624, the optical filter 67a, a light detection unit 61a, and a light detection unit 61b.

The excitation light source 7 is a light source capable of emitting excitation light of a plurality of wavelength bands (wavelength distributions) by switching, and is, for example, a light emitting diode (LED) light source, a light source including a plurality of monochromatic laser light sources, or a light source combining a white light source and a wavelength selection optical element. The multiband pass filter 623 is a multiband pass filter provided on the optical path of the excitation light of the excitation light source 7 and having a property of transmitting light of a plurality of predetermined wavelength bands. The transmission wavelength band of the multiband pass filter 623 is set according to a plurality of wavelength bands of excitation light that can be used. The dichroic mirror 622 is an optical member that is provided between the multiband pass filter 623 and the sample S and has a property of reflecting excitation light toward the sample S and transmitting fluorescent light emitted from the sample S in response to the reflection. The multiband pass filter 624 is a multiband pass filter that is provided on the optical path of the fluorescent light transmitted by the dichroic mirror 622 and has a property of transmitting light of a plurality of predetermined wavelength bands. The transmission wavelength band of the multiband pass filter 624 is set according to the wavelength band of fluorescent light generated in a dye that can be included in the sample S to be observed.

The optical filter 67a is an optical system that is provided on the optical path of the fluorescent light transmitted by the multiband pass filter 624 and acquires wavelength information of the fluorescent light. That is, the optical filter 67a separates the fluorescent light from the sample S into two optical paths with different wavelength characteristics. For example, as the optical filter 67a, a dichroic mirror having a wavelength characteristic of transmittance in which the transmittance linearly increases as the wavelength increases is used. The optical filter 67a using such a dichroic mirror separates the fluorescent light with different wavelength characteristics, reflects a part of the fluorescent light with a wavelength characteristic in which the reflectance decreases as the wavelength increases, and transmits a part of the fluorescent light with a wavelength characteristic in which the transmittance increases as the wavelength increases. The optical filter 67a is provided with a support mechanism (not illustrated) that detachably supports the optical filter 67a on the optical path of the fluorescent light from the multiband pass filter 624.

The light detection unit 61a is an imaging device that images a two-dimensional image composed of N (N is an integer of 2 or more, for example, $2048 \times 2048$) pixels, and is a camera that images one component of fluorescent light separated by the optical filter 67a to acquire one separated fluorescent light image when the optical filter 67a is supported on the optical path of the fluorescent light. In addition, when the optical filter 67a is separated from the optical path of the fluorescent light, the light detection unit 61a images the fluorescent light transmitted through the multiband pass filter 624, and acquires a fluorescent light image. The light detection unit 61a outputs the acquired separated fluorescent light image or the fluorescent light image to the image processing unit 81 by using communication or via a recording medium. The light detection unit 61b is an imaging device that images a two-dimensional image composed of the same N pixels as the light detection unit 61a, and is a camera that images the other component of fluorescent light separated by the optical filter 67a to acquire the other separated fluorescent light image when the optical filter 67a is supported on the optical path of the fluorescent light. The light detection unit 61b outputs the acquired separated fluorescent light image to the image processing unit 81 by using communication or via a recording medium.

Note that the fluorescent light image may be acquired by adding images by the image processing unit 81 by using the one separated fluorescent light image acquired by the light detection unit 61a and the other separated fluorescent light image acquired by the light detection unit 61b. In that case, the support mechanism in the optical filter 67a may be excluded.

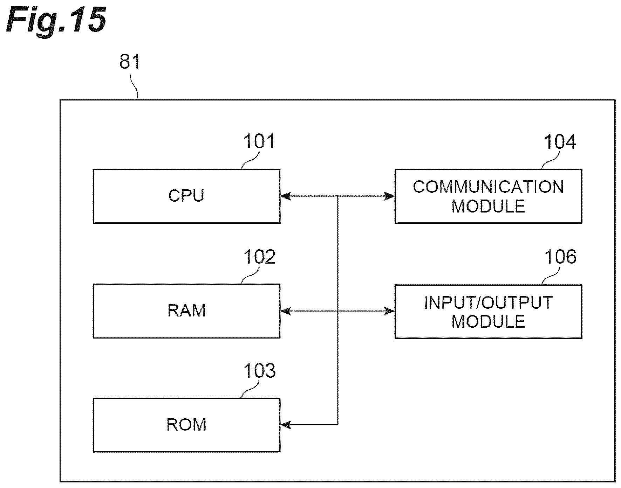

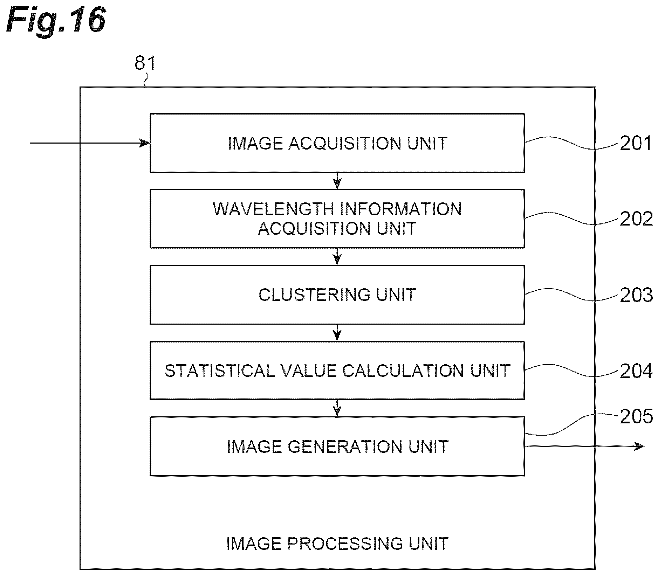

Next, a configuration of the image processing unit 81 will be described with reference to FIGS. 15 and 16. FIG. 15 is a block diagram illustrating an example of a hardware configuration of the image processing unit 81, and FIG. 16 is a block diagram illustrating a functional configuration of the image processing unit 81.

As illustrated in FIG. 15, the image processing unit 81 is physically a computer or the like including a central processing unit (CPU) 101 that is a processor, a random access memory (RAM) 102 or a read only memory (ROM) 103 that is a recording medium, a communication module 104, an input/output module 106, and the like, which are electrically connected to each other. Note that the image processing unit 81 may include, as input/output devices, a display, a keyboard, a mouse, a touch panel display, or the like, or may include a data recording device such as a hard disk drive or a semiconductor memory. Furthermore, the image processing unit 81 may include a plurality of computers.

As illustrated in FIG. 16, the image processing unit 81 includes an image acquisition unit 201, a wavelength information acquisition unit 202, a clustering unit 203, a statistical value calculation unit 204, and an image generation unit 205 as functional components. Each functional unit of the image processing unit 81 illustrated in FIG. 16 is realized by loading a program (dye image acquisition program according to the embodiment) onto hardware such as the CPU 101 and the RAM 102, and, under the control of the CPU 101, operating the communication module 104, the input/output module 106, and the like, and reading and writing data in the RAM 102. The CPU 101 of the image processing unit 81 executes the computer program to cause each functional unit in FIG. 16 to function, and sequentially executes processing corresponding to a dye image acquisition method to be described later. Note that the CPU 101 may be a single piece of hardware or may be implemented in programmable logic such as an FPGA like a software processor. The RAM or the ROM may be a single piece of hardware or may be built in a programmable logic such as an FPGA. Various types of data necessary for execution of the computer program and various types of data generated by execution of the computer program are all stored in an internal memory such as the ROM 103 and the RAM 102 or a storage medium such as a hard disk drive. Hereinafter, functions of functional components of the image processing unit 81 will be described in detail.

The image acquisition unit 201 acquires C (C is an integer of 2 or more) fluorescent light images designated in advance for the sample S from the image acquisition device 1. These C fluorescent light images are fluorescent light images composed of N pixels generated by respectively irradiating the sample S with excitation light of the C wavelength bands and imaging fluorescent light generated from the sample S in response to the irradiation in a state where the optical filter 67a is separated from the optical path of the fluorescent light. At this time, the number C (the number C of wavelength bands of excitation light with which the sample S is irradiated) of fluorescent light images to be acquired is designated in advance so as to be equal to or larger than the maximum number of dyes that can be included in the sample S.

In addition, the image acquisition unit 201 acquires C sets of separated fluorescent light images designated in advance for the sample S from the image acquisition device 1. These C sets of separated fluorescent light images are sets of separated fluorescent light images composed of the N pixels generated by respectively irradiating the sample S with excitation light of the C wavelength bands in a state where the optical filter 67a is supported on the optical path of the fluorescent light, and separating the fluorescent light generated from the sample S into two components in response to the irradiation and imaging of the two components.

For each of the C sets of separated fluorescent light images, the wavelength information acquisition unit 202 calculates a ratio between a fluorescent light intensity (luminance value) of one separated fluorescent light image and a fluorescent light intensity of the other separated fluorescent light image, thereby estimating a centroid fluorescent light wavelength indicating a centroid of the wavelength distribution of the fluorescent light. At this time, the wavelength information acquisition unit 202 calculates an average value of the fluorescent light intensities of the one separated fluorescent light image and an average value of the fluorescent light intensities of the other separated fluorescent light image for the pixel groups clustered by the clustering unit 203 described below, and calculates a ratio of these average values. The wavelength information acquisition unit 202 acquires the estimated centroid fluorescent light wavelength as wavelength information related to a fluorescent light wavelength.

The clustering unit 203 executes clustering on the N pixels constituting the C fluorescent light images based on the C fluorescent light images acquired by the image acquisition unit 201 and the wavelength information acquired by the wavelength information acquisition unit 202. Prior to the clustering processing, the clustering unit 203 generates matrix data Y in which fluorescent light intensity values of the N pixels constituting each of the C fluorescent light images are one-dimensionally arranged in parallel.

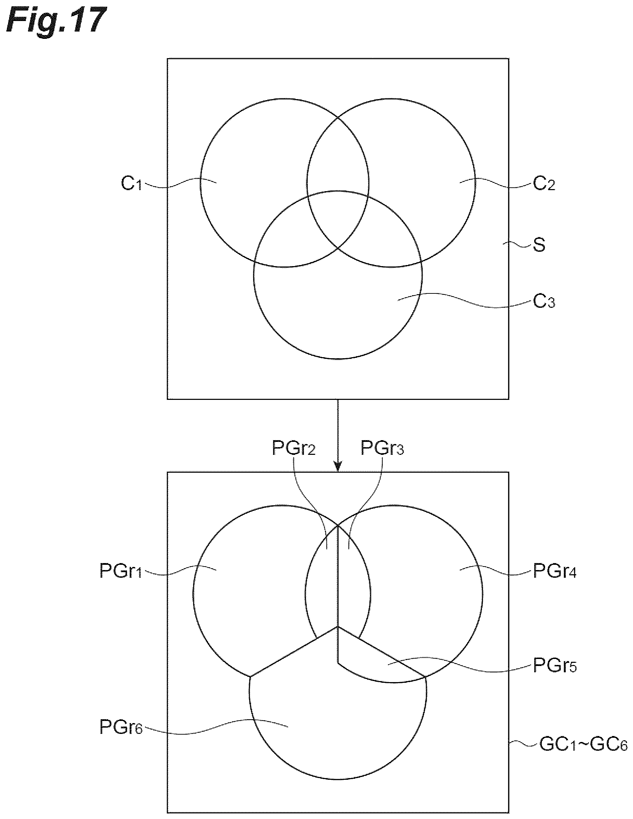

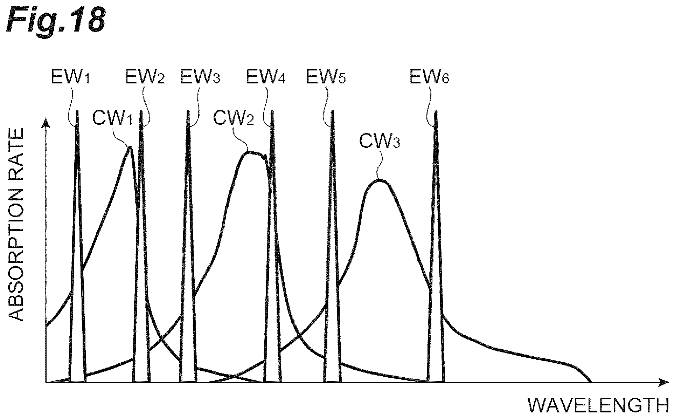

Next, the clustering unit 203 has a function (first clustering function) of clustering the N pixels into C pixel groups based on distribution information of fluorescent light intensities for each excitation light of the C wavelength bands. Specifically, the clustering unit 203 clusters pixels having the same wavelength band of excitation light having a highest fluorescent light intensity into the same pixel group. FIG. 17 illustrates an image of pixel groups clustered by the first clustering function by the clustering unit 203, and FIG. 18 illustrates wavelength characteristics of absorption rates of excitation light of a plurality of dyes included in the sample S. As illustrated in FIG. 17, assuming a case where there are three types of dyes including a dye $C_1$, a dye $C_2$, and a dye $C_3$ in the sample S, and six fluorescent light images are obtained by using excitation light of six types of wavelength bands, the clustering unit 203 clusters N pixels included in six fluorescent light images $GC_1$ to $GC_6$ into six pixel groups $PGr_1$ to $PGr_6$. As illustrated in FIG. 18, in general, different types of dyes have wavelength characteristics of different absorption rates, and the three types of dyes $C_1$, $C_2$, and $C_3$ also have wavelength characteristics $CW_1$, $CW_2$, and $CW_3$ having different peak wavelengths. Therefore, in six types of wavelength bands $EW_1$, $EW_2$, $EW_3$, $EW_4$, $EW_5$, and $EW_6$ of the excitation light, a dye having a largest absorption rate is determined to be one of the three types of dyes $C_1$, $C_2$, and $C_3$. For example, the dye $C_1$ has the largest absorption rate of the excitation light of the wavelength band $EW_1$, the dye $C_1$ has the largest absorption rate of the excitation light of the wavelength band $EW_2$, and the dye $C_2$ has the largest absorption rate of the excitation light of the wavelength band $EW_3$. By using this property, the clustering unit 203 can cluster N pixels into a pixel group in a range in which the same dye is distributed by the first clustering function. However, the six pixel groups $PGr_1$ to $PGr_6$ clustered by the first clustering function do not correspond to the three types of dyes $C_1$, $C_2$, and $C_3$ on a one-to-one basis.

In addition, the clustering unit 203 has a function (second clustering function) of further clustering the C pixel groups clustered by the first clustering function into L (L is an integer of 2 or more and N-1 or less) pixel groups based on the wavelength information. Here, the number L of pixel groups to be clustered is set in advance as a parameter stored in the image processing unit 81 in correspondence with the number of types of dyes that can exist in the sample S. That is, the clustering unit 203 specifies a centroid fluorescent light wavelength estimated for the wavelength band of the excitation light corresponding to the pixel groups for each of the C pixel groups clustered by the first clustering function. More specifically, the clustering unit 203 acquires, from the wavelength information acquisition unit 202, wavelength information targeted for a pixel group clustered with a certain wavelength band having a largest absorption rate, and specifies a centroid fluorescent light wavelength based on the acquired wavelength information. At this time, the wavelength information acquisition unit 202 acquires the wavelength information by using an average value of fluorescent light intensities in the pixel groups of a set of separated fluorescent light images obtained corresponding to the wavelength band. Further, the clustering unit 203 clusters the C pixel groups into L pixel groups by determining a distance (closeness of values) between centroid fluorescent light wavelengths specified for each of the C pixel groups. Then, the clustering unit 203 regenerates the matrix data Y in which the fluorescent light intensity values of the pixels of the C fluorescent light images are one-dimensionally arranged in parallel by dividing into a cluster matrix for each of the L pixel groups.

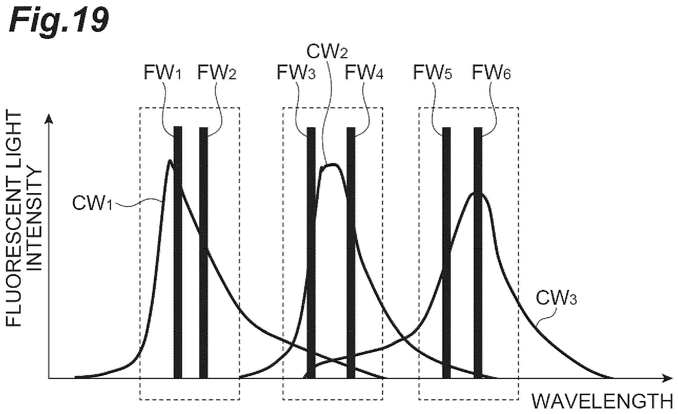

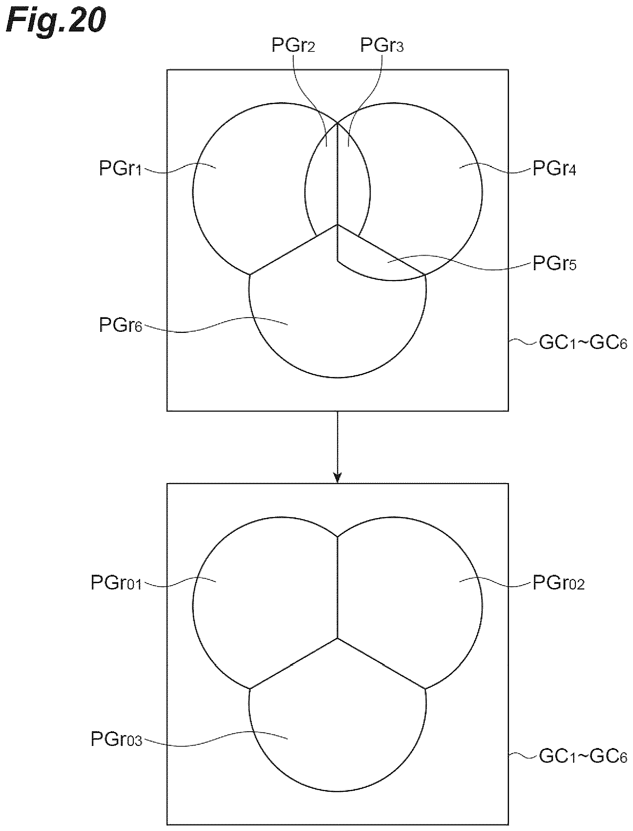

FIG. 19 illustrates a distribution of centroid fluorescent light wavelengths specified by the clustering unit 203, and FIG. 20 illustrates an image of pixel groups clustered by the second clustering function by the clustering unit 203. In the example illustrated in FIGS. 19 and 20, centroid fluorescent light wavelengths $FW_1$ to $FW_6$ are specified for each of the six pixel groups $PGr_1$ to $PGr_6$ clustered by the first clustering function, the pixel group $PGr_1$ and the pixel group $PGr_2$ in which the distances between the centroid fluorescent light wavelengths close to each other are clustered into a new pixel group $PGr_{01}$, similarly, the pixel group $PGr_3$ and the pixel group $PGr_4$ are clustered into a pixel group $PGr_{02}$, and the pixel group $PGr_5$ and the pixel group $PGr_6$ are clustered into a pixel group $PGr_{03}$. As a result, the pixels of the C fluorescent light images can be divided into L pixel groups corresponding to the distribution of the pixels assumed to be included in the sample S. However, the division number L by the second clustering function is set to be equal to or less than the number C (the number C of wavelength bands of excitation light) of fluorescent light images.

Based on L cluster matrices obtained for the sample S, the statistical value calculation unit 204 obtains a mixing matrix A for generating K dye images indicating the distribution of each of K (K is an integer of 2 or more and C or less) dyes from the C fluorescent light images. In general, according to the calculation method of nonnegative matrix factorization (NMF), the relationship between the matrix data Y which is an observation value matrix and the dye matrix data X in which K dye images are arranged one-dimensionally in parallel for each pixel is expressed by the following formula by using the mixing matrix A;

$$Y = AX.$$

Here, Y is matrix data of C rows and N columns, A is matrix data of C rows and K columns, and X is matrix data of K rows and N columns. On the contrary, when the value of the mixing matrix A is obtained, the dye matrix data X can be derived by the following formula by using an inverse matrix $A^{-1}$ of the mixing matrix A and the matrix data Y (this processing is called unmixing);

$$X = A^{-1}Y.$$

Here, the statistical value calculation unit 204 regenerates matrix data Y' by compressing the matrix data Y generated by the clustering unit 203 in units of pixel groups clustered by the clustering unit 203. Specifically, the statistical value calculation unit 204 calculates a statistical value for each pixel group of the clustered cluster matrix for the fluorescent light intensity of each row of the matrix data Y, and compresses the pixel group of each row into one pixel having the calculated statistical value. As a result, the statistical value calculation unit 204 regenerates the matrix data Y' which is matrix data of C rows and L columns. The statistical value calculation unit 204 may calculate, as the statistical value, an average value based on the integrated value of the fluorescent light intensities, may calculate a mode of the fluorescent light intensities, or may calculate an intermediate value of the fluorescent light intensities.

Further, the statistical value calculation unit 204 derives the mixing matrix A based on the matrix data Y' by utilizing the property that the following formula including the mixing matrix A holds true in the regenerated matrix data Y' and the dye matrix data X' compressed in the same manner from the dye matrix data X;

$$Y' = AX'.$$

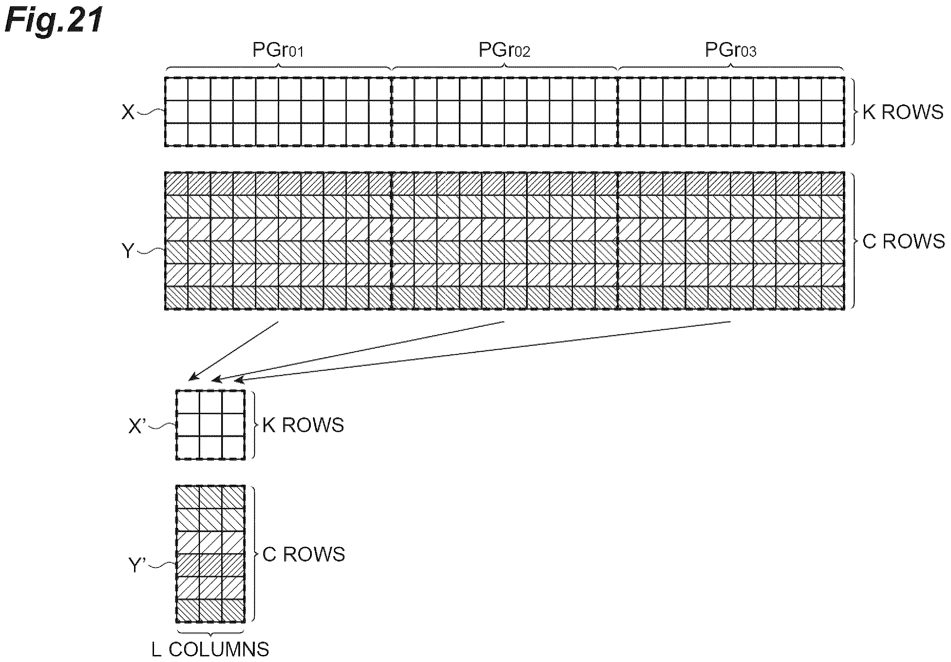

FIG. 21 illustrates an image of the matrix data Y' regenerated by the statistical value calculation unit 204 and the dye matrix data X' corresponding thereto. One grid illustrated in FIG. 21 represents one element of the matrix data. As described above, the dye matrix data X and the matrix data Y divided into the three pixel groups $PGr_{01}$ to $PGr_{03}$ are data compressed into the dye matrix data X' and the matrix data Y' of three columns with the statistical value for each of the pixel groups $PGr_{01}$ to $PGr_{03}$ as a representative value.

The statistical value calculation unit 204 derives the mixing matrix A based on the matrix data Y' as follows. That is, the statistical value calculation unit 204 sets an initial value to the mixing matrix A, calculates the following loss function (loss value) Los while sequentially changing the value of the mixing matrix A, and derives the mixing matrix A that reduces the value of the loss function Los. Note that a regularization term such as L1 norm $\lambda |A|$ ($\lambda$ is a coefficient indicating a degree to which the regularization term is emphasized) may be added to the loss function.

[Mathematical Formula 1]

$$Los = \sum_{j}^{C} \frac{1}{a}(Y' - AX')_{1j}{}^{2} + \sum_{j}^{C} \frac{1}{b}(Y' - AX')_{2j}{}^{2} + \sum_{j}^{C} \frac{1}{c}(Y' - AX')_{3j}{}^{2}$$

In the above formula, j is a parameter indicating a position (corresponding to the wavelength band of the excitation light) of a row of the matrix data, a subscript 1j of the matrix indicates matrix data of a j-th row of the first cluster matrix, a subscript 2j of the matrix indicates matrix data of a j-th row of the second cluster matrix, and a subscript 3j of the matrix indicates matrix data of a j-th row of the third cluster matrix. In addition, the parameters a, b, and c indicate the average values of the statistical values of the respective columns of the matrix data Y'.

As described above, the statistical value calculation unit 204 calculates the loss function with reference to the statistical values of the C pieces of matrix data Y' for each of the L cluster matrices divided by the clustering unit 203, calculates the loss function Los based on a sum of the L loss functions, and obtains the mixing matrix A based on the loss function Los. At this time, the statistical value calculation unit 204 corrects the loss function calculated for each of the L cluster matrices by dividing the loss function by the average values a, b, and c of the statistical values of the C pieces of matrix data Y', and then calculates a sum of the corrected loss functions to obtain the loss function Los. Note that the statistical value calculation unit 204 may calculate the loss function for each of the L cluster matrices by correcting the loss function by dividing the row component for each wavelength band of the excitation light having a difference value Y' - AX' by using the C statistical values corresponding to each wavelength band of the excitation light.

Note that the above formula can also be generalized as follows. That is, the statistical value calculation unit 204 derives the mixing matrix A and the dye matrix data X' based on the matrix data Y' as follows. That is, the statistical value calculation unit 204 sets initial values to the mixing matrix A and the dye matrix data X', calculates the loss function (loss value) Los by using the following formula while sequentially changing the values of the mixing matrix A and the dye matrix data X', and derives the mixing matrix A and the dye matrix data X' that reduce the value of the loss function Los. Note that a regularization term such as L1 norm $\lambda |A|$ ($\lambda$ is a coefficient indicating a degree to which the regularization term is emphasized) may be added to the loss function. Alternatively, the calculation may be performed with a constraint that the mixing matrix A and the dye matrix data X' have nonnegative values.

[Mathematical Formula 2]

$$Los = \sum_{i}^{L} Los_{i} = \sum_{i}^{L}\sum_{j}^{C} w_{ij}(Y' - AX')_{ij}{}^{2}$$

In the above formula, j is a parameter indicating a position (corresponding to the wavelength band of the excitation light) of the row of the matrix data, and i is a parameter indicating a position (corresponding to an i-th cluster) of the column of the matrix data. Further, $w_{ij}$ represents a weight of each element of the matrix data, and may be calculated from the value of each element or its standard deviation. In addition, it is also possible to set all $w_{ij}$ to the same value and not consider the weight of each element. Note that a formula in which the average values of the statistical values of the respective columns of the matrix data Y' are set as a, b, c,... in the above formula and is replaced with $w_{1j} = 1/a$, $w_{2j} = 1/b$, and $w_{3j} = 1/c$ is the same as the formula of the loss function Los described above.

As described above, the statistical value calculation unit 204 calculates the loss function with reference to the statistical values of the C pieces of matrix data Y' for each of the L cluster matrices divided by the clustering unit 203, calculates the loss function Los based on the sum of L loss functions $Los_{i}$, and obtains the mixing matrix A based on the loss function Los. Note that the statistical value calculation unit 204 may calculate the loss function $Los_i$ for each of the L cluster matrices by correcting the loss function $Los_i$ by dividing the row component for each wavelength band of the excitation light having a difference value Y' - AX' by using the C statistical values corresponding to each wavelength band of the excitation light.

The image generation unit 205 acquires K dye images by unmixing the C fluorescent light images obtained for the sample S to be observed by using the mixing matrix A derived by the statistical value calculation unit 204. Specifically, the image generation unit 205 calculates the dye matrix data X by applying the inverse matrix $A^{-1}$ of the mixing matrix A to the matrix data Y generated by the clustering unit 203 based on the C fluorescent light images. Then, the image generation unit 205 regenerates K dye images from the dye matrix data X, and outputs the regenerated K dye images. The output destination at this time may be an output device of the image processing unit 81 such as a display or a touch panel display, or may be an external device connected to the image processing device so as to be capable of data communication.

An example of the unmixing processing accompanying the imaging in the Pinkel arrangement has been described above, but the unmixing processing accompanying the imaging in the Pinkel arrangement is not limited to the example described above.

For example, in the image processing unit 81 of the present embodiment, the number L of pixel groups to be clustered and the number K of dye images are set in advance as parameters according to the number of dyes included in the sample S. However, the image processing unit 81 may sequentially change the parameters L and K to repeat generation of the dye image. For example, unmixing may be executed with the number of clusters L = C - 1 and the number of dyes K = C - 1 to generate a dye image, and when the accuracy of the obtained dye image for each dye is poor, the number of clusters L and the number of dyes K may be sequentially changed to C - 2, C - 3,... to repeat the unmixing.

Further, the image acquisition device 1 of the present embodiment may generate a dye image by executing unmixing by using the C sets of separated fluorescent light images obtained by the light detection unit 61a and the light detection unit 61b as they are. In this case, the number of fluorescent light images to be unmixed is $2 \times C$. Further, the image acquisition device 1 may switch and use M band pass filters that transmit one fluorescent light band as the multiband pass filter 624, and execute unmixing on $M \times C$ fluorescent light images obtained as a result.

In addition, the image acquisition device 1 may include a plurality of excitation light sources 7 that simultaneously irradiate the sample S with the excitation light of the plurality of wavelength bands, and may acquire C fluorescent light images while changing the intensity ratio between the excitation light of the plurality of wavelength bands and irradiating the sample S with the excitation light of C types of wavelength distributions. Also in this case, a dye image for each of a plurality of dyes can be obtained with a high accuracy.

When generating the matrix data Y before being clustered, the image processing unit 81 according to the present embodiment may generate the matrix data Y as data in which N pixels constituting an image are arranged in a row direction according to a prescribed rule, or may generate the matrix data Y as data in which the pixels are arranged in the row direction according to a random rule. However, the data of the fluorescent light image of the C rows constituting one piece of matrix data Y is set as data in which N pixels are arranged according to the same rule. Even when the matrix data Y generated by random arrangement is used, the same matrix data Y' can be regenerated by clustering.

Furthermore, when generating the matrix data Y before being clustered, the image processing unit 81 according to the present embodiment may generate the matrix data Y by excluding background pixels (pixels having no dye) included in the fluorescent light image.

As a method of clustering the pixel groups in the image processing unit 81, a method using machine learning such as a K-means method, a method using deep learning, or the like may be adopted.

In addition to the K-means method, a method using machine learning such as a decision tree, a support vector machine, a K nearest neighbor (KNN), a self-organizing map, spectral clustering, a Gaussian mixture model, DBSCAN, Affinity Propagation, MeanShift, Ward, Agglomerative Clustering, OPTICS, and BIRCH, a method using deep learning, or the like may be adopted as the method of clustering pixel groups in the image processing unit 81. In addition, pre-processing may be performed on the matrix data Y before clustering is applied. For example, the dimension of C-dimensional data of each pixel may be reduced by Phasor Analysis, principal component analysis, singular value decomposition, independent component analysis, linear discriminant analysis, t-SNE, UMAP, other machine learning, or the like.

The image acquisition device 1 of the present embodiment may adopt, as the optical filter 67a, a single band dichroic mirror that transmits one wavelength band or a multiband dichroic mirror that transmits a plurality of wavelength bands, in addition to the inclined dichroic mirror having a wavelength characteristic in which transmittance linearly changes with respect to the wavelength as described above. At this time, the above-described multiband pass filter may be adopted as the multiband pass filter 624, or a single band pass filter that transmits one wavelength band may be adopted.

Here, in a case where a single band pass filter is adopted as the multiband pass filter 624, and an inclined dichroic mirror having a characteristic of a transmittance characteristic $t(\lambda) = a_1\lambda + b_1$ with respect to a wavelength $\lambda$ is adopted as the optical filter 67a, the wavelength information acquisition unit 202 of the image processing unit 81 calculates wavelength information WLC indicating a centroid fluorescent light wavelength by using the following formula.

[Mathematical formula 3]

$$WLC = \frac{\left\{\frac{x_1 - x_2}{x_1 + x_2} - (2b_1 - 1)\right\}}{2a_1}$$

Here, $x_1$ is a fluorescent light intensity of one separated fluorescent light image, and $x_2$ is a fluorescent light intensity of the other separated fluorescent light image. On the other hand, in a case where a single band pass filter is adopted as the multiband pass filter 624 and a single band dichroic mirror or a multiband dichroic mirror is adopted as the optical filter 67a, the wavelength information acquisition unit 202 of the image processing unit 81 calculates wavelength information $WL_{ratio}$ by using the following formula;

$$WL_{ratio} = x_2/x_1.$$

Furthermore, the optical filter 67a is not limited to the dichroic mirror, and a filter set having similar wavelength characteristics may be used, or a beam splitter (polarization beam splitter or the like) that divides fluorescent light may be used. In addition, a set of separated fluorescent light images may be obtained by performing imaging a plurality of times by using one camera by switching and using filters having different wavelength characteristics. In addition, fluorescent light of two components separated by the optical filter 67a may be imaged by dividing a visual field by one camera.

In addition, the wavelength information acquisition unit 202 of the image acquisition device 1 of the present embodiment may perform processing using a fluorescent light image acquired by using a camera capable of detecting at least two or more fluorescent light wavelengths in order to acquire wavelength information related to the fluorescent light wavelength. Examples of such a camera include a color sensor (color camera), a multiband sensor (multiband camera), and the like. For example, in a case where a color sensor is used, the wavelength information acquisition unit 202 can calculate and acquire information related to a fluorescent light wavelength by comparing three intensity values of an R pixel, a G pixel, and a B pixel obtained from the color sensor. Furthermore, in the case of a multiband sensor, the wavelength information acquisition unit 202 can also calculate and acquire information related to a fluorescent light wavelength by comparing intensity values for different wavelengths obtained from the multiband sensor. Also in this case, since the wavelength information is acquired based on the fluorescent light image obtained by imaging the fluorescent light, the wavelength information can be analyzed with a high accuracy. As a result, the accuracy of separation of the dye image can be improved.

[Operations and Effects]

In the image acquisition device 1, the fluorescent light emitted from the sample S can be detected through the optical filter 67a having the transmission characteristic in which the transmittance changes in the fluorescent light wavelength region. As a result, it is possible to efficiently and accurately acquire matrix data (for example, a mixing matrix) for performing the unmixing processing. Therefore, according to the image acquisition device 1, it is possible to efficiently and accurately acquire a plurality of fluorescent light images separated for each of a plurality of wavelength regions.

In the image acquisition device 1, the optical path switching unit 62 includes the dichroic mirror 622 that selectively reflects the excitation light in the plurality of first wavelength regions and selectively transmits the fluorescent light in the plurality of second wavelength regions. As a result, it is possible to reliably irradiate the sample S with the excitation light for each of the plurality of first wavelength regions. In addition, the fluorescent light can be reliably detected in the plurality of second wavelength regions.

In the image acquisition device 1, the optical path switching unit 62 includes the multiband pass filter 623 that selectively transmits the excitation light in the plurality of first wavelength regions incident on the dichroic mirror 622. As a result, it is possible to more reliably irradiate the sample S with the excitation light for each of the plurality of first wavelength regions.

In the image acquisition device 1, the optical path switching unit 62 includes the multiband pass filter 624 that selectively transmits the fluorescent light in the plurality of second wavelength regions emitted from the dichroic mirror 622. As a result, it is possible to more reliably detect the fluorescent light in the plurality of second wavelength regions.

In the image acquisition device 1, the optical filter 67a has a transmission characteristic in which the transmittance linearly changes in the fluorescent light wavelength region. As a result, it is possible to more efficiently and more accurately acquire matrix data for performing the unmixing processing.

In the image acquisition device 1, the optical filter unit 67 is configured to exclude the optical filter 67a from the third optical path P3. As a result, by excluding the optical filter 67a from the third optical path P3 after the detection of the fluorescent light for acquiring the matrix data, it is possible to efficiently and accurately detect the fluorescent light for acquiring the plurality of fluorescent light images.

In the image acquisition device 1, the optical filter unit 67 is configured to arrange the optical filter 67a on the third optical path P3 between the optical path switching unit 62 and the imaging lens 66. As a result, it is possible to prevent the fluorescent light formed by the imaging lens 66 from being affected by the aberration of the optical filter 67a.

In the image acquisition device 1, the fluorescent light filter unit 68 is configured to arrange the light passing portion 683 and each of the plurality of single band pass filters 682 on the third optical path P3. As a result, it is possible to indirectly (that is, by performing the unmixing processing) acquire a plurality of fluorescent light images by detecting fluorescent light in a state where the light passing portion 683 is arranged on the third optical path P3. In addition, a plurality of fluorescent light images can be directly acquired by detecting fluorescent light in a state where each of the plurality of single band pass filters 682 is arranged on the third optical path P3.

In the image acquisition device 1, the optical path switching unit 63 is configured to switch the optical path of the excitation light from the fourth optical path P4 to each of the fifth optical path P5 and the sixth optical path P6. As a result, by detecting fluorescent light in the fluorescent light macro image acquisition unit 4 using the excitation light emitted from the same light emitting unit 72, for example, the existence range of the sample S on the slide glass G can be specified.

In the image acquisition device 1, the optical path switching unit 63 is configured to rotate the mirror 631 about the fourth optical path P4 as a center line, and switches the state of the mirror 631 to each of the state in which the fourth optical path P4 and the fifth optical path P5 intersect each other on the mirror surface 631a and the state in which the fourth optical path P4 and the sixth optical path P6 intersect each other on the mirror surface 631a. As a result, it is possible to switch the optical path of the excitation light from the fourth optical path P4 to each of the fifth optical path P5 and the sixth optical path P6 in a space-saving manner.

In the image acquisition device 1, the image processing unit 81 generates the fluorescent light macro image of the slide glass G, and sets the imaging conditions in the Pinkel arrangement in the fluorescent light micro image acquisition unit 6 based on the fluorescent light macro image of the slide glass G. As a result, for example, by acquiring the fluorescent light macro image for an entire region of the slide glass G, the existence range of the sample S on the slide glass G can be specified. Furthermore, under the imaging conditions set based on the fluorescent light macro, for example, by indirectly acquiring the fluorescent light micro images of the sample S in the Pinkel arrangement (a plurality of fluorescent light micro images separated for each of a plurality of wavelength regions) for the entire region of the sample S, the state of the entire region of the sample S can be efficiently grasped.

In the image acquisition device 1, the image processing unit 81 generates the fluorescent light micro images of the sample S in the Pinkel arrangement, and sets the imaging conditions in the Sedat arrangement in the fluorescent light micro image acquisition unit 6 based on the fluorescent light micro images of the sample S in the Pinkel arrangement. As a result, under the imaging conditions set based on the fluorescent light micro images of the sample S in the Pinkel arrangement, for example, the fluorescent light micro images of the sample S in the Sedat arrangement (a plurality of fluorescent light micro images separated for each of a plurality of wavelength regions) are directly acquired for a specific region in the sample S, whereby the state of the specific region in the sample S can be accurately grasped.

A time required for scanning the excitation light in the Pinkel arrangement is shorter than a time required for scanning the excitation light in the Sedat arrangement. On the other hand, wavelength separation accuracy of the fluorescent light micro images generated in the Sedat arrangement is higher than that of the fluorescent light micro images generated in the Pinkel arrangement. As described above, the fluorescent light micro images in the Pinkel arrangement are generated and observed for the entire region of the sample S, and the fluorescent light micro images in the Sedat arrangement are generated and observed for a specific region in the sample S, whereby the sample S can be appropriately analyzed.

[Modifications]

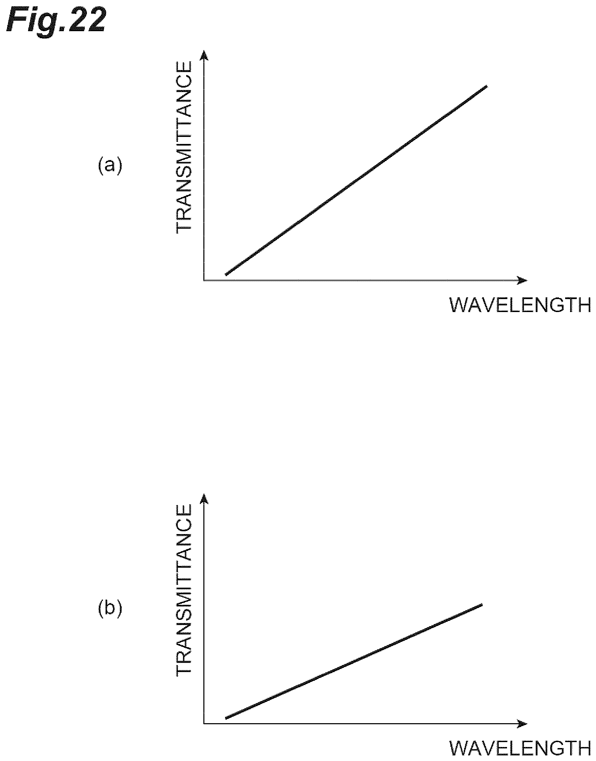

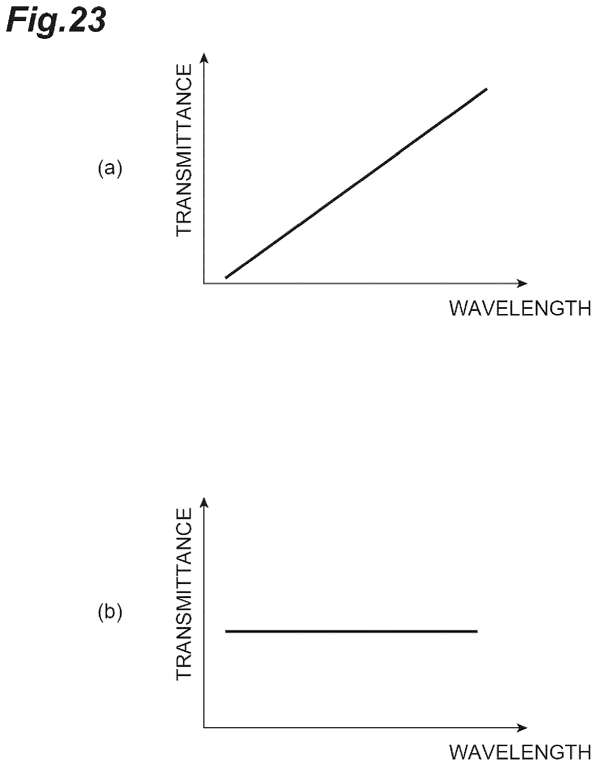

The present disclosure is not limited to the above embodiment. For example, the optical filter unit 67 may include a plurality of optical filters (first optical filter and second optical filter) 67a having transmission characteristics different from each other, and may be configured such that any one of the optical filters 67a is arranged on the third optical path P3. In this case, as illustrated in (a) and (b) of FIG. 22, the transmission characteristics (first transmission characteristic and second transmission characteristic) of each of the optical filters 67a may be such that the transmittance linearly changes in the fluorescent light wavelength region and the slopes are different from each other in the fluorescent light wavelength region. As illustrated in (a) and (b) of FIG. 23, while the transmission characteristic of one optical filter 67a (first transmission characteristic) may be such that the transmittance linearly changes in the fluorescent light wavelength region, the transmission characteristic of another optical filter 67a (second transmission characteristic) may be such that the transmittance is constant in the fluorescent light wavelength region.

That is, the transmission characteristics of the at least one optical filter 67a may be such that the transmittance changes in the fluorescent light wavelength region. In this case, by detecting fluorescent light through each of the plurality of first optical filters 67a, it is possible to efficiently and accurately acquire matrix data for performing unmixing processing.

Note that the fluorescent light micro image acquisition unit 6 may be configured to enable attachment and detachment (replacement) of each optical filter 67a.

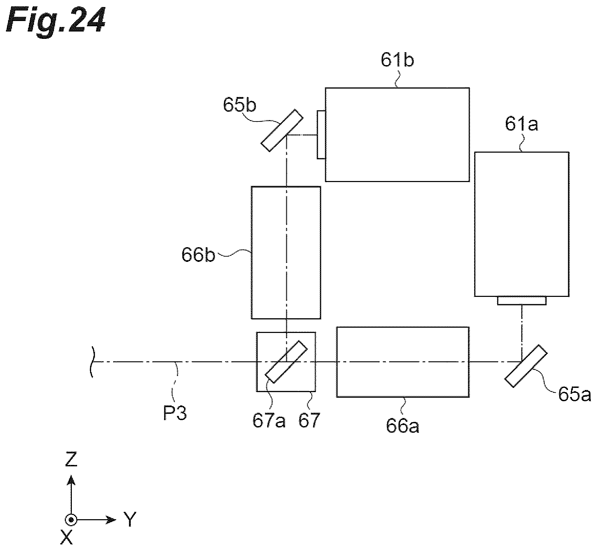

Furthermore, the optical filter unit 67 and the light detection unit 61 may be configured as follows. For example, as illustrated in FIGS. 24, 25, 26, and 27, the optical filter 67a may separate the fluorescent light from the sample S into two optical paths with different wavelength characteristics (similar to the example illustrated in FIG. 14). In this case, as the optical filter 67a, for example, a dichroic mirror having a wavelength characteristic of transmittance in which the transmittance linearly increases as the wavelength increases is used. By detecting the fluorescent light transmitted through the optical filter 67a and the fluorescent light reflected by the optical filter 67a, matrix data for performing the unmixing processing can be more efficiently and more accurately acquired.

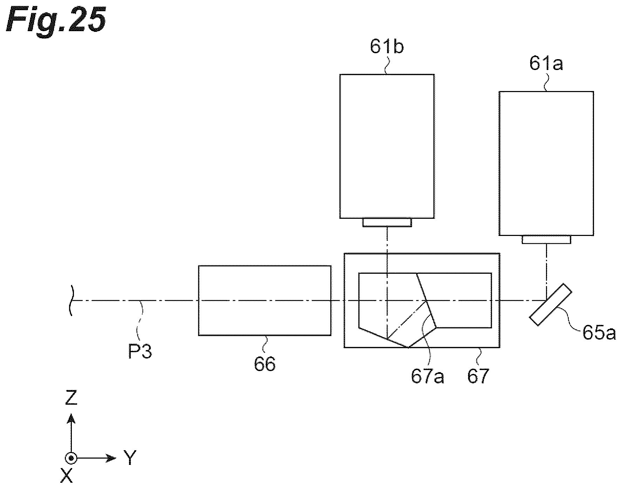

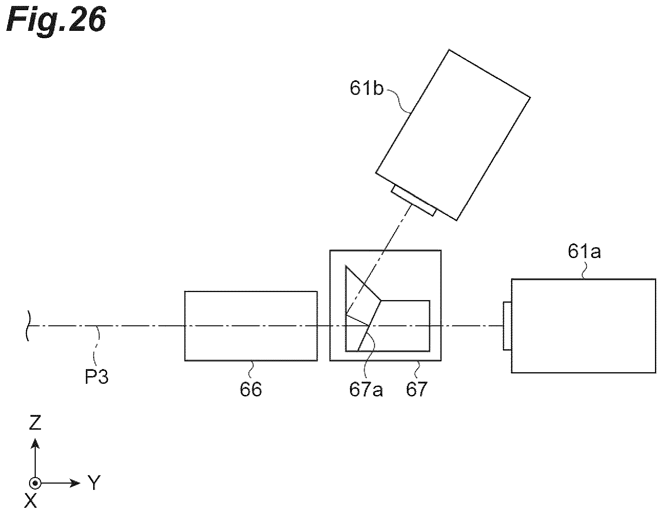

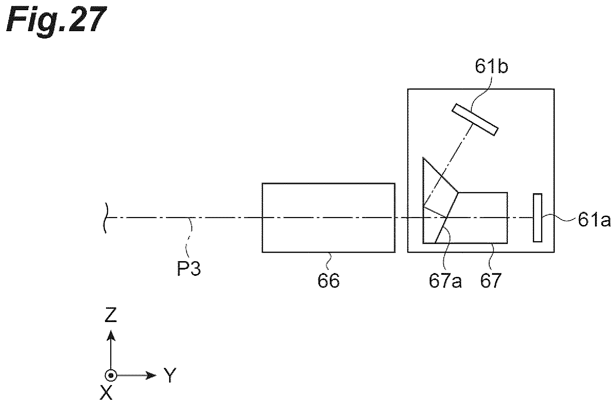

In the example illustrated in FIG. 24, the fluorescent light transmitted through the optical filter 67a is transmitted through the imaging lens 66a, reflected by the mirror 65a, and detected by the light detection unit 61a. The fluorescent light reflected by the optical filter 67a is transmitted through the imaging lens 66b, reflected by the mirror 65b, and detected by the light detection unit 61b. In the example illustrated in FIGS. 25 and 26, the optical filter 67a is provided in the prism. In the example illustrated in FIGS. 25 and 26, the fluorescent light transmitted through the optical filter 67a is transmitted through the prism, reflected by the mirror 65a, and detected by the light detection unit 61a. The fluorescent light reflected by the optical filter 67a is reflected by the prism and detected by the light detection unit 61b. When the optical filter 67a is provided in the prism, a degree of freedom of a layout of the light detection unit 61a and the light detection unit 61b is improved. In the example illustrated in FIG. 27, the prism incorporating the optical filter 67a, and the light detection unit 61a and the light detection unit 61b are configured as one camera.

In addition, the image acquisition device 1 may not include the light output unit 71 as long as the image acquisition device 1 includes the light emitting unit 72. For example, the excitation light source 7 may be configured as an external device, and in this case, the optical fiber 73 or the like may be connected to the light emitting unit 72, and excitation light may be guided from the excitation light source 7 configured as an external device to the light emitting unit 72. The image acquisition device 1 may not include the image processing unit 81. For example, the image processing device 8 may be configured as an external device, and in this case, the image acquisition device 1 may be communicably connected to the image processing device 8 configured as an external device. In addition, the optical path switching unit 62 may be configured to selectively transmit the excitation light in the plurality of first wavelength regions and selectively reflect the fluorescent light in the plurality of second wavelength regions.

**Reference Signs List**

| | |
|---|---|
| 1 | Image acquisition device |
| 31 | Support unit |
| 45 | Irradiation unit |
| 47 | Light detection unit (second light detection unit) |
| 61 | Light detection unit (first light detection unit) |
| 62 | Optical path switching unit (first optical path switching unit) |
| 622 | Dichroic mirror |
| 623 | Multiband pass filter (first multiband pass filter) |
| 624 | Multiband pass filter (second multiband pass filter) |
| 63 | Optical path switching unit (second optical path switching unit) |
| 631 | Mirror |
| 631a | Mirror surface |
| 66 | Imaging lens |
| 67 | Optical filter unit |
| 67a | Optical filter (first optical filter, second optical filter) |
| 68 | Fluorescent light filter unit |
| 682 | Single band pass filter |
| 683 | Light passing portion |
| 72 | Light emitting unit |
| 81 | Image processing unit |
| P1 | First optical path |
| P2 | Second optical path |
| P3 | Third optical path |
| P4 | Fourth optical path |
| P5 | Fifth optical path |

P6        Sixth optical path
S         Sample

**Claims**

1.  An image acquisition device comprising:

    a support unit configured to support a sample;
    a light emitting unit configured to emit excitation light;
    a first light detection unit configured to detect fluorescent light emitted from the sample by irradiation with the excitation light;
    a first optical path switching unit configured to switch an optical path of the excitation light and an optical path of the fluorescent light; and
    an optical filter unit including an optical filter through which the fluorescent light is transmitted, wherein
    the light emitting unit is optically connected to the first optical path switching unit by a first optical path,
    the support unit is optically connected to the first optical path switching unit by a second optical path,
    the first light detection unit is optically connected to the first optical path switching unit by a third optical path,
    the first optical path switching unit is configured to switch the optical path of the excitation light in a plurality of first wavelength regions different from each other from the first optical path to the second optical path, and switch the optical path of the fluorescent light in a plurality of second wavelength regions shifted from the plurality of first wavelength regions from the second optical path to the third optical path,
    the optical filter has a transmission characteristic in which transmittance changes in a fluorescent light wavelength region including the plurality of second wavelength regions, and
    the optical filter unit is configured to arrange the optical filter on the third optical path.

2.  The image acquisition device according to claim 1, wherein the first optical path switching unit includes a dichroic mirror configured to selectively reflect the excitation light in the plurality of first wavelength regions and selectively transmit the fluorescent light in the plurality of second wavelength regions.

3.  The image acquisition device according to claim 2, wherein the first optical path switching unit further includes a first multiband pass filter configured to selectively transmit the excitation light in the plurality of first wavelength regions incident on the dichroic mirror.

4.  The image acquisition device according to claim 2 or 3, wherein the first optical path switching unit further includes a second multiband pass filter configured to selectively transmit the fluorescent light in the plurality of second wavelength regions emitted from the dichroic mirror.

5.  The image acquisition device according to any one of claims 1 to 4, wherein the optical filter has the transmission characteristic in which the transmittance linearly changes in the fluorescent light wavelength region.

6.  The image acquisition device according to any one of claims 1 to 5, wherein

    the optical filter unit includes a first optical filter and a second optical filter,
    the first optical filter is the optical filter and has a first transmission characteristic as the transmission characteristic,
    the second optical filter has a second transmission characteristic different from the first transmission characteristic, and
    the optical filter unit is configured to arrange each of the first optical filter and the second optical filter on the third optical path.

7.  The image acquisition device according to any one of claims 1 to 6, wherein the optical filter unit is configured to exclude the optical filter from the third optical path.

8.  The image acquisition device according to any one of claims 1 to 7, further comprising an imaging lens arranged on the third optical path and configured to form an image of the fluorescent light on the first light detection unit, wherein the optical filter unit is configured to arrange the optical filter on the third optical path between the first optical path switching unit and the imaging lens.

9. The image acquisition device according to any one of claims 1 to 8, further comprising a fluorescent light filter unit including a light passing portion and a plurality of single band pass filters, wherein

the light passing portion allows the fluorescent light in the fluorescent light wavelength region to pass therethrough,
each of the plurality of single band pass filters selectively transmits the fluorescent light for each of the plurality of second wavelength regions, and
the fluorescent light filter unit is configured to arrange the light passing portion and each of the plurality of single band pass filters on the third optical path.

10. The image acquisition device according to claim 9, further comprising an image processing unit configured to generate a first fluorescent light image of the sample based on data output from the first light detection unit in a state where the light passing portion is arranged on the first optical path, and generate a second fluorescent light image of the sample based on data output from the first light detection unit in a state where each of the plurality of single band pass filters is arranged on the first optical path, wherein
the image processing unit sets imaging conditions for generating the second fluorescent light image based on the first fluorescent light image.

11. The image acquisition device according to any one of claims 1 to 9, further comprising:

an irradiation unit configured to irradiate the sample supported by the support unit with the excitation light at a position different from a position in a case where the fluorescent light is detected by the first light detection unit;
a second light detection unit configured to detect the fluorescent light emitted from the sample by irradiation with the excitation light by the irradiation unit; and
a second optical path switching unit arranged on the first optical path and configured to switch the optical path of the excitation light, wherein
the light emitting unit is optically connected to the second optical path switching unit by a fourth optical path being a part of the first optical path,
the first optical path switching unit is optically connected to the second optical path switching unit by a fifth optical path being a part of the first optical path,
the irradiation unit is optically connected to the second optical path switching unit by a sixth optical path, and
the second optical path switching unit is configured to switch the optical path of the excitation light from the fourth optical path to each of the fifth optical path and the sixth optical path.

12. The image acquisition device according to claim 11, wherein

the second optical path switching unit includes a mirror having a mirror surface arranged on the fourth optical path in a state of being inclined with respect to the fourth optical path, and
the second optical path switching unit is configured to rotate the mirror about the fourth optical path as a center line, and switch a state of the mirror to each of a state in which the fourth optical path and the fifth optical path intersect each other on the mirror surface and a state in which the fourth optical path and the sixth optical path intersect each other on the mirror surface.

13. The image acquisition device according to claim 11 or 12, further comprising

an image processing unit configured to generate a third fluorescent light image of the sample based on data output from the second light detection unit and generate a fourth fluorescent light image of the sample based on data output from the first light detection unit, wherein
the image processing unit sets imaging conditions for generating the fourth fluorescent light image based on the third fluorescent light image.

Fig.1

# Fig.2

*Fig.3*

# Fig.4

**Fig.5**

EP 4 653 850 A1

# Fig.6

*Fig.7*

P3

62

FLUORESCENT
LIGHT

624

621

EXCITATION
LIGHT

P5
(P1)

623

622

621

FLUORESCENT
LIGHT

EXCITATION
LIGHT

Z

X Y

P2

## Fig.8

(a)

(b)

# Fig.9

63

(a)

EXCITATION
LIGHT

631a

631

632

P4
(P1)

EXCITATION
LIGHT

P5(P1)

P6

EXCITATION
LIGHT

63

(b)

EXCITATION
LIGHT

632

631a

P4
(P1)

631

**Fig.10**

*Fig.11*

# Fig.12

```
            ┌─────────────┐
            │    START    │
            └─────────────┘
                   │
    ┌──────────────────────────────────┐
    │    IMAGE BY FLUORESCENT LIGHT     │ ～S01
    │   MACRO IMAGE ACQUISITION UNIT    │
    └──────────────────────────────────┘
                   │
    ┌──────────────────────────────────┐
    │  GENERATE FLUORESCENT LIGHT IMAGE │ ～S02
    └──────────────────────────────────┘
                   │
    ┌──────────────────────────────────┐
    │ SET IMAGING CONDITIONS IN Pinkel  │ ～S03
    │  ARRANGEMENT BY FLUORESCENT LIGHT │
    │    MICRO IMAGE ACQUISITION UNIT   │
    └──────────────────────────────────┘
                   │
    ┌──────────────────────────────────┐
    │ IMAGE BY FLUORESCENT LIGHT MICRO  │ ～S04
    │   IMAGE ACQUISITION UNIT IN       │
    │      Pinkel ARRANGEMENT           │
    └──────────────────────────────────┘
                   │
    ┌──────────────────────────────────┐
    │  GENERATE FLUORESCENT LIGHT IMAGE │ ～S05
    └──────────────────────────────────┘
                   │
    ┌──────────────────────────────────┐
    │ SET IMAGING CONDITIONS IN Sedat   │ ～S06
    │  ARRANGEMENT BY FLUORESCENT LIGHT │
    │    MICRO IMAGE ACQUISITION UNIT   │
    └──────────────────────────────────┘
                   │
    ┌──────────────────────────────────┐
    │ IMAGE BY FLUORESCENT LIGHT MICRO  │ ～S07
    │   IMAGE ACQUISITION UNIT IN       │
    │       Sedat ARRANGEMENT           │
    └──────────────────────────────────┘
                   │
    ┌──────────────────────────────────┐
    │  GENERATE FLUORESCENT LIGHT IMAGE │ ～S08
    └──────────────────────────────────┘
                   │
            ┌─────────────┐
            │     END     │
            └─────────────┘
```

## Fig.13

**Fig.14**

*Fig.15*

# Fig.16

81

```
IMAGE PROCESSING UNIT

    ┌─────────────────────────────────────┐
    │      IMAGE ACQUISITION UNIT         │ ──── 201
    └─────────────────────────────────────┘
                    ↓
    ┌─────────────────────────────────────┐
    │      WAVELENGTH INFORMATION          │ ──── 202
    │         ACQUISITION UNIT             │
    └─────────────────────────────────────┘
                    ↓
    ┌─────────────────────────────────────┐
    │         CLUSTERING UNIT             │ ──── 203
    └─────────────────────────────────────┘
                    ↓
    ┌─────────────────────────────────────┐
    │   STATISTICAL VALUE CALCULATION UNIT │ ──── 204
    └─────────────────────────────────────┘
                    ↓
    ┌─────────────────────────────────────┐  ──── 205
    │       IMAGE GENERATION UNIT          │
    └─────────────────────────────────────┘
```

# Fig.17

## Fig.18

## Fig.19

## Fig.20

Fig.21

EP 4 653 850 A1

## Fig.22

(a)

(b)

# Fig.23

(a)

(b)

## Fig.24

**Fig.25**

## Fig.26

## Fig.27

## INTERNATIONAL SEARCH REPORT

| | International application No. |
|---|---|
| | **PCT/JP2023/047024** |

**A. CLASSIFICATION OF SUBJECT MATTER**

*G01N 21/64*(2006.01)i; *G01N 21/27*(2006.01)i; *G02B 21/06*(2006.01)i; *G02B 21/36*(2006.01)i
FI: G01N21/64 E; G01N21/27 A; G02B21/06; G02B21/36

According to International Patent Classification (IPC) or to both national classification and IPC

**B. FIELDS SEARCHED**

Minimum documentation searched (classification system followed by classification symbols)

G01N21/00-21/958: G02B21/00-21/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 5-150164 A (OLYMPUS OPTICAL CO., LTD.) 18 June 1993 (1993-06-18) paragraphs [0001]-[0014], fig. 1, 7 | 1-3 |
| Y | | 4-9, 11-12 |
| Y | WO 2020/195136 A1 (HAMAMATSU PHOTONICS K.K.) 01 October 2020 (2020-10-01) paragraphs [0036]-[0040], fig. 1 | 4-9, 11-12 |
| Y | JP 2017-90250 A (KYOTO PREFECTURAL PUBLIC UNIV. CORP.) 25 May 2017 (2017-05-25) paragraph [0048], fig. 4 | 6-9, 11-12 |
| Y | JP 2007-233093 A (HAMAMATSU PHOTONICS K.K.) 13 September 2007 (2007-09-13) claim 1, fig. 2 | 11-12 |
| A | JP 8-320437 A (OLYMPUS OPTICAL CO., LTD.) 03 December 1996 (1996-12-03) entire text, all drawings | 1-13 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 March 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2023/047024**

### C. DOCUMENTS CONSIDERED TO BE RELEVANT

| Category* | Citation of document, with indication, where appropriate, of the relevant passages | Relevant to claim No. |
|---|---|---|
| A | JP 2018-136156 A (PANASONIC INTELLECTUAL PROPERTY MANAGEMENT CO., LTD.) 30 August 2018 (2018-08-30) entire text, all drawings | 1-13 |

Form PCT/ISA/210 (second sheet) (July 2022)

**INTERNATIONAL SEARCH REPORT**
Information on patent family members

International application No.

**PCT/JP2023/047024**

| Patent document cited in search report | | | Publication date (day/month/year) | Patent family member(s) | | | Publication date (day/month/year) |
|---|---|---|---|---|---|---|---|
| JP | 5-150164 | A | 18 June 1993 | US | 5371624 | A | |
| | | | | column 1, line 1 to column 6, line 65, fig. 1, 7 | | | |
| WO | 2020/195136 | A1 | 01 October 2020 | US | 2022/0178837 | A1 | |
| | | | | paragraphs [0042]-[0046], fig. 1 | | | |
| | | | | EP | 3951845 | A1 | |
| | | | | CN | 113632211 | A | |
| | | | | KR | 10-2021-0144683 | A | |
| JP | 2017-90250 | A | 25 May 2017 | WO | 2017/082242 | A1 | |
| | | | | CN | 108351302 | A | |
| JP | 2007-233093 | A | 13 September 2007 | US | 2007/0206096 | A1 | |
| | | | | claim 1, fig. 2 | | | |
| | | | | EP | 1830216 | A1 | |
| JP | 8-320437 | A | 03 December 1996 | US | 5710663 | A | |
| JP | 2018-136156 | A | 30 August 2018 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021526220 A